(19) Europäisches Patentamt
European Patent Office
Office européen des brevets

(11) **EP 4 482 064 A1**

(12) **EUROPEAN PATENT APPLICATION**
published in accordance with Art. 153(4) EPC

(43) Date of publication:
**25.12.2024 Bulletin 2024/52**

(21) Application number: 23765769.7

(22) Date of filing: **20.02.2023**

(51) International Patent Classification (IPC):
*H04L 1/00* (2006.01)

(52) Cooperative Patent Classification (CPC):
**H04L 1/00**

(86) International application number:
**PCT/CN2023/077148**

(87) International publication number:
**WO 2023/169191 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.03.2022 CN 202210239627**
**25.04.2022 CN 202210439969**

(71) Applicant: **Huawei Technologies Co., Ltd.**
**Shenzhen, Guangdong 518129 (CN)**

(72) Inventors:
• HU, Mengshi
  Shenzhen, Guangdong 518129 (CN)
• HAN, Xiao
  Shenzhen, Guangdong 518129 (CN)
• DU, Rui
  Shenzhen, Guangdong 518129 (CN)
• NAREN, Gerile
  Shenzhen, Guangdong 518129 (CN)
• YANG, Xun
  Shenzhen, Guangdong 518129 (CN)

(74) Representative: **Gill Jennings & Every LLP**
**The Broadgate Tower**
**20 Primrose Street**
**London EC2A 2ES (GB)**

(54) **COMMUNICATION METHOD AND COMMUNICATION APPARATUS**

(57) This application provides a communication method and a communication apparatus. In this method, a sensing receive device sends first information to a sensing transmit device in advance, to use the first information to indicate a padding requirement of the sensing receive device for a trigger frame. The padding requirement is for sensing. The sensing transmit device sends the trigger frame having a padding bit for sensing to the sensing receive device. The padding bit is determined based on the padding requirement indicated by the first information. Therefore, the trigger frame sent by the sensing transmit device satisfies the padding requirement of the sensing receive device for the trigger frame, so that the sensing receive device has enough time to receive the trigger frame and send sensing content reported as triggered by the trigger frame. Further, an immediate mode may be used for feedback, efficiency of feeding back the sensing content by a sensing receiver is improved.

FIG. 7

**Description**

This application claims priorities to Chinese Patent Application No. 202210239627.7, filed with the China National Intellectual Property Administration on March 11, 2022 and entitled "COMMUNICATION METHOD AND COMMUNICATION APPARATUS", and to Chinese Patent Application No. 202210439969.3, filed with the China National Intellectual Property Administration on April 25, 2022 and entitled "COMMUNICATION METHOD AND COMMUNICATION APPARATUS", both of which are incorporated herein by reference in their entireties.

**TECHNICAL FIELD**

Embodiments of this application relate to the field of wireless communication technologies, and more specifically, to a communication method and a communication apparatus.

**BACKGROUND**

In daily life, a signal sent by a wireless fidelity (wireless fidelity, Wi-Fi) device is usually received after the signal is reflected, diffracted, and scattered by various obstacles. This phenomenon enables the actually received signal to be usually obtained by superimposing a plurality of signals, that is, a channel environment may become complex. However, from another perspective, this also facilitates sensing, via a wireless signal, of a physical environment that the wireless signal passes through. An ambient environment can be inferred and sensed by analyzing a wireless signal, for example, channel state information (channel state information, CSI), affected by various obstacles, to derive a wireless local area network (wireless local area network, WLAN) sensing technology. Due to wide deployment of Wi-Fi devices and an increase in sensing requirements, sensing performed by using a widely available Wi-Fi device is a hot topic of current research.

Currently, a trigger-based feedback procedure and a non-trigger-based feedback procedure are supported in the WLAN sensing technology. In the trigger-based feedback procedure, two feedback modes: an immediate mode and a delayed mode are supported. However, feedback efficiency based on the two feedback modes is not high.

**SUMMARY**

This application provides a communication method to improve sensing feedback efficiency.

According to a first aspect, a communication method is provided, and the method includes:

A first device sends first information to a second device. The first information indicates a padding requirement of the first device for a trigger frame, and the padding requirement is for sensing.

The first device receives the trigger frame from the second device. The trigger frame has a padding bit for sensing, and the padding bit is determined based on the padding requirement.

According to a second aspect, a communication method is provided, and the method includes:

A second device receives first information from a first device. The first information indicates a padding requirement of the first device for a trigger frame, and the padding requirement is for sensing.

The second device sends the trigger frame to the first device. The trigger frame has a padding bit for sensing, and the padding bit is determined based on the padding requirement.

In the technical solutions of this application, the first device sends the first information to the second device in advance, to indicate the padding requirement of the first device for the trigger frame to the second device. The padding requirement is for sensing. The trigger frame sent by the second device to the first device based on the padding requirement indicated by the first information has the padding bit for sensing. Because the padding bit for sensing is determined based on the padding requirement indicated by the first information, the padding requirement of the first device for the trigger frame is satisfied. Therefore, after receiving the trigger frame, the first device can have enough time to feed back, in a current measurement instance to the second device, sensing content reported as triggered by the trigger frame, thereby improving feedback efficiency.

In some implementations of the first aspect or the second aspect, the first information indicates a mapping relationship between requirement information and an element, and the requirement information is used to determine the padding bit and a feedback mode. The element includes one or more of a spatial stream quantity, a resource unit RU size, a bit quantity, and a bit quantity range, and the feedback mode includes the immediate mode or the delayed mode.

In this technical solution, the first device may not only determine an element dynamic range, but also determine padding requirements and feedback modes separately corresponding to different element ranges, thereby improving sensing feedback flexibility.

In some implementations of the first aspect or the second aspect, the first information indicates a mapping relationship between R pieces of requirement information and R elements, the R pieces of requirement information one-to-one correspond to the R elements, and R is a positive integer.

In this implementation, optionally, the first information further indicates a value of R.

In some implementations of the first aspect or the second aspect, the first information indicates the element, and there is the mapping relationship between the element and the requirement information, and the requirement information is used to determine the padding bit and the feedback mode. The element includes one or more of the spatial stream quantity, the resource unit RU size, the bit quantity, and the bit quantity range, and the feedback mode includes the immediate mode or the delayed mode.

In this technical solution, by presetting the mapping relationship between the element and the requirement information, the first device only needs to indicate the element, so that indication overheads can be reduced.

In some implementations of the first aspect or the second aspect, the first information indicates the requirement information, and there is the mapping relationship between the requirement information and the element, and the requirement information is used to determine the padding bit and the feedback mode. The element includes one or more of the spatial stream quantity, the resource unit RU size, the bit quantity, and the bit quantity range, and the feedback mode includes the immediate mode or the delayed mode.

In this technical solution, by presetting the mapping relationship between the element and the requirement information, the first device only needs to indicate the requirement information, so that the indication overheads can be reduced.

In some implementations of the first aspect or the second aspect, that the requirement information is used to determine the padding bit and the feedback mode includes:

The requirement information is used to determine the feedback mode and a minimum requirement for the padding bit, and the minimum requirement is zero.

In this technical solution, in a possible case, the requirement information indicates the delayed mode, and in the delayed mode, the minimum requirement of the first device for the padding bit for sensing is zero. Alternatively, in another possible case, the requirement information indicates the immediate mode, and in the immediate mode, the minimum requirement of the first device for the padding bit for sensing is zero.

In some implementations of the first aspect or the second aspect, the mapping relationship between the requirement information and the element further includes:

When a representation value of the element is greater than or equal to a specified threshold, the padding requirement that is indicated by the requirement information and that is of the first device for the trigger frame is fixedly set.

Alternatively, when a representation value of the element is less than a specified threshold, the padding requirement that is indicated by the requirement information and that is of the first device for the trigger frame is fixedly set.

In this technical solution, when the representation value of the element satisfies a preset condition, the padding requirement indicated by the requirement information is fixedly set. In this case, determining of the padding requirement is no longer affected by another factor. For example, once a measurement result of sensing measurement is greater than eight spatial streams, the delayed mode is used. A specified threshold of the spatial stream quantity may be specified in a communication protocol standard, or may be indicated by transmitting a value of x (for example, x=8), so that signaling overheads can be reduced.

In some implementations of the first aspect or the second aspect, the element is the bit quantity, and the mapping relationship includes:

a mapping relationship between the bit quantity p and duration q; or
a mapping relationship between the bit quantity p, the duration q, and a preset bit quantity threshold r.

The duration q indicates the padding requirement, and p, q, and r are all positive integers.

In this technical solution, the requirement information only needs to indicate values of some parameters (for example, p and/or q, or one or more of p, q, and r) related to the mapping relationship, so that a complex mapping relationship can be dynamically indicated, thereby reducing the indication overheads.

In some implementations of the first aspect or the second aspect, the mapping relationship between the bit quantity p and the duration q satisfies the following relational expression:

(a quantity of bits that actually need to be processed/p)·q; and/or
the mapping relationship between the bit quantity p, the duration q, and the preset bit quantity threshold r satisfies the following relational expression:
((a quantity of bits that actually need to be processed-r)/p)·q, where
p, q, and r are all positive integers, and q is in a unit of a microsecond.

In some implementations of the first aspect or the second aspect, the first information indicates one or more of the following:

a first index value, where the first index value indicates the immediate mode and the padding requirement of the first device for the trigger frame;

a second index value, where the second index value indicates the immediate mode and no padding requirement; and

a third index value, where the third index value indicates the delayed mode and no padding requirement.

In some implementations of the first aspect or the second aspect, the trigger frame is used to trigger the first device to feed back sensing content of a first type. The sensing content of the first type is one of at least two types of sensing content that can be fed back by the first device, and the at least two types of sensing content include channel state information CSI or truncated channel impulse response TCIR.

According to a third aspect, a communication method is provided, and the method includes:

A first device receives a trigger frame from a second device, and the trigger frame has no padding bit for sensing in one or more of the following cases:

A trigger frame probe phase exists between a null data packet announcement NDPA phase of sensing measurement, and receiving of the trigger frame and feedback of sensing content;

a threshold-based channel change collection phase exists between the NDPA phase of sensing measurement, and the receiving of the trigger frame and the feedback of the sensing content; or

one or more other phases exist between the NDPA phase of sensing measurement, and the receiving of the trigger frame and the feedback of the sensing content.

The first device sends, based on the trigger frame, the sensing content to the second device in an immediate mode.

According to a fourth aspect, a communication method is provided, and the method includes:

A first device receives a trigger frame from a second device, and the trigger frame is used to trigger the first device to feed back sensing content.

The first device sends the sensing content and second information to the second device based on the trigger frame. The second information indicates a feedback mode for the sensing content, and the feedback mode is one of the following:

an immediate mode, or

a delayed mode.

According to a fifth aspect, a communication method is provided, and the method includes:

A first device sends first indication information to a second device. The first indication information indicates first duration between receiving a first PPDU and sending a second PPDU in an immediate mode by the first device, the second PPDU includes a measurement result for sensing, and the measurement result for sensing is obtained based on the first PPDU.

The first device sends the second PPDU.

With reference to the fifth aspect, in some implementations of the fifth aspect, that the first device sends the second PPDU includes:

If duration between receiving the first PPDU and sending the second PPDU by the first device satisfies the first duration, the first device sends the second PPDU in the immediate mode; or

if duration between receiving the first PPDU and sending the second PPDU by the first device does not satisfy the first duration, the first device sends the second PPDU in a delayed mode.

With reference to the fifth aspect, in some implementations of the fifth aspect, the method further includes:

The first device receives second indication information from the second device. The second indication information indicates the first device to send the second PPDU in the immediate mode or a delayed mode, and the second indication information is determined based on the first indication information.

That the first device sends the second PPDU includes:

The first device sends the second PPDU based on the second indication information.

With reference to the fifth aspect, in some implementations of the fifth aspect, the method further includes:

The first device sends third indication information to the second device. The third indication information indicates that duration between receiving the first PPDU and sending the second PPDU by the first device needs to satisfy the first duration, or the third indication information indicates that the first device is required to send the second PPDU in the immediate mode.

That the first device sends the second PPDU includes:
The first device sends the second PPDU in the immediate mode.

In some implementations of the fifth aspect or the sixth aspect, a moment at which the first device receives the first indication information is before a start moment of an NDP.

In some implementations of the fifth aspect or the sixth aspect, the first PPDU is an NDP, a moment at which the first device receives the second indication information is before a start moment of the NDP.

According to a sixth aspect, a communication method is provided, and the method includes:
A second device receives first indication information from a first device. The first indication information indicates first duration between receiving a first PPDU and sending a second PPDU in an immediate mode by the first device, the second PPDU includes a measurement result for sensing, and the measurement result for sensing is obtained based on the first PPDU.

The second device receives the second PPDU from the first device.

With reference to the sixth aspect, in some implementations of the sixth aspect, that the second device receives the second PPDU from the first device includes:

If duration between receiving the first PPDU and sending the second PPDU by the first device satisfies the first duration, the second device receives the second PPDU from the first device, where the second PPDU is sent in the immediate mode; or
if duration between receiving the first PPDU and sending the second PPDU by the first device does not satisfy the first duration, the second device receives the second PPDU from the first device, where the second PPDU is sent in a delayed mode.

With reference to the sixth aspect, in some implementations of the sixth aspect, the method further includes:
The second device sends second indication information to the first device based on the first indication information. The second indication information indicates the first device to send the second PPDU in the immediate mode or a delayed mode.

That the second device receives the second PPDU from the first device includes:
The second device receives the second PPDU from the first device.

If the second indication information indicates the first device to send the second PPDU in the immediate mode, the second PPDU is sent in the immediate mode; or
if the second indication information indicates the first device to send the second PPDU in the delayed mode, the second PPDU is sent in the delayed mode.

With reference to the sixth aspect, in some implementations of the sixth aspect, the method further includes:
The second device receives third indication information from the first device. The third indication information indicates that duration between receiving the first PPDU by the first device and sending the second PPDU by the first device needs to satisfy the first duration, or the third indication information indicates that the first device is required to send the second PPDU in the immediate mode.

That the second device receives the second PPDU from the first device includes:
The second device receives the second PPDU from the first device. The second PPDU is sent in the immediate mode.

With reference to the sixth aspect, in some implementations of the sixth aspect, a moment at which the second device receives the first indication information is before a start moment of an NDP.

With reference to the sixth aspect, in some implementations of the sixth aspect, the first PPDU is an NDP, a moment at which the second device sends the second indication information is before a start moment of the NDP.

In some implementations of the fifth aspect or the sixth aspect, the first PPDU is an NDP.

In some implementations of the fifth aspect or the sixth aspect, the first duration is duration between an end moment of the NDP and a start moment at which the first device sends the second PPDU in the immediate mode.

According to a seventh aspect, a communication apparatus is provided. The communication apparatus has a function of implementing the method according to any one of the first aspect, the third aspect, the fourth aspect, and the fifth aspect, or the possible implementations of these aspects. The functions may be implemented by hardware, or may be implemented by hardware executing corresponding software. The hardware or the software includes one or more units corresponding to the foregoing function.

According to an eighth aspect, a communication apparatus is provided. The communication apparatus has a function of implementing the method according to any one of the second aspect or the sixth aspect, or the possible implementations of these aspects. The functions may be implemented by hardware, or may be implemented by hardware executing corresponding software. The hardware or the software includes one or more units corresponding to the foregoing function.

According to a ninth aspect, a communication apparatus is provided and includes a processor and a memory. Optionally, the apparatus may further include a transceiver. The memory is configured to store a computer program, and the processor is configured to: invoke and run the computer program stored in the memory, and control the transceiver to receive and send a signal, to enable the communication apparatus to perform the method according to any one of the first aspect, the third aspect, the fourth aspect, and the fifth aspect, or the possible implementations of these aspects.

According to a tenth aspect, a communication apparatus is provided and includes a processor and a memory. Optionally, the apparatus may further include a transceiver. The memory is configured to store a computer program, and the processor is configured to: invoke and run the computer program stored in the memory, and control the transceiver to receive and send a signal, to enable the communication apparatus to perform the method according to any one of the second aspect or the sixth aspect, or the possible implementations of these aspects.

According to an eleventh aspect, a communication apparatus is provided, including a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to enable the method according to any one of the first aspect, the third aspect, the fourth aspect, and the fifth aspect, or the possible implementations of these aspects to be performed.

According to a twelfth aspect, a communication apparatus is provided, including a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to enable the method according to any one of the second aspect or the sixth aspect, or the possible implementations of these aspects to be performed.

According to a thirteenth aspect, a computer-readable storage medium is provided. The computer-readable storage medium stores computer instructions, and when the computer instructions are run on a computer, the method according to any one of the first aspect to the sixth aspect, or the possible implementations of these aspects is enabled to be performed.

According to a fourteenth aspect, a computer program product is provided. The computer program product includes computer program code, and when the computer program code is run on a computer, the method according to any one of the first aspect to the sixth aspect, or the possible implementations of these aspects is enabled to be performed.

According to a fifteenth aspect, a wireless communication system is provided, including the communication apparatus according to the seventh aspect and/or the communication apparatus according to the eighth aspect.

## BRIEF DESCRIPTION OF DRAWINGS

FIG. 1 is an example of a system architecture applicable to an embodiment of this application;
FIG. 2 is an example of a procedure of a sensing measurement instance;
FIG. 3 is another example of a procedure of a sensing measurement instance;
FIG. 4 is a schematic flowchart of a communication method according to this application;
FIG. 5 is a block diagram of a communication apparatus according to this application;
FIG. 6 is a diagram of a structure of a communication apparatus according to this application;
FIG. 7 is a schematic flowchart of another communication method according to this application;
FIG. 8 is an example of duration between receiving a first PPDU and sending a second PPDU by a first device; and
FIG. 9 is another example of duration between receiving a first PPDU and sending a second PPDU by a first device.

## DESCRIPTION OF EMBODIMENTS

The following describes technical solutions of embodiments in this application with reference to accompanying drawings.

The technical solutions provided in this application may be applicable to a wireless local area network (wireless local area network, WLAN) system, for example, may be applicable to an IEEE 802. 11-related standard like the 802.11a/b/g standard, the 802.11n standard, the 802.11ac standard, the 802.11ax standard, the 802. 11bf standard, or another future standard.

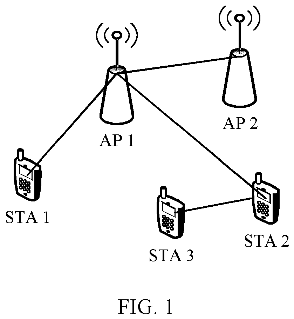

FIG. 1 is an example of a system architecture applicable to an embodiment of this application. As shown in FIG. 1, the communication method provided in this application is applicable to data communication between an access point (access point, AP) and one or more stations (station, STA) (for example, data communication between an AP 1 and a STA 1, and between the AP 1 and a STA 2), and is also applicable to data communication between APs (for example, data communication between the AP 1 and an AP 2) and data communication between STAs (for example, data communication between the STA 2 and a STA 3).

Although embodiments of this application are mainly described by using an example in which a WLAN network, especially a network applying the IEEE 802.11 system standard, is deployed, a person skilled in the art easily understands that aspects in this application may be extended to another network like Bluetooth (Bluetooth), a high-performance radio LAN (high-performance radio LAN, HIPERLAN), a wide area network (WAN), a personal area network (personal area network, PAN), or another network that is known or developed in the future, that uses various standards or protocols. Therefore, regardless of used coverage and a used wireless access protocol, various aspects provided in this application can be applicable to any appropriate wireless network.

Alternatively, embodiments of this application may be further applied to a wireless local area network system like an Internet of things (Internet of things, IoT) network or a vehicle-to-everything (vehicle-to-everything, V2X) network. Certainly, embodiments of this application may be further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system. The foregoing communication systems applicable to this application are merely examples for descriptions, and the communication systems applicable to this application are not limited thereto. This is stated herein once for all, and is not repeated below.

The access point may be an access point used by a terminal (for example, a mobile phone) to access a wired (or wireless) network, and is mainly deployed at home, in a building, and in a campus. A typical coverage radius is tens of meters or more than 100 meters. Certainly, the access point may alternatively be deployed outdoors. The access point is equivalent to a bridge that connects a wired network and a wireless network. A main function of the access point is connecting various wireless network clients together and then connecting the wireless network to the Ethernet. Specifically, the access point may be a terminal (like a mobile phone) or a network device (like a router) with a Wi-Fi chip. The access point may be a device that supports the 802.11be standard. Alternatively, the access point may be a device that supports a plurality of WLAN standards of the 802.11 family, for example, 802.11ax, 802. 11ac, 802.11n, 802.11g, 802.11b, 802.11a, and a next generation of 802. 1 1be. The access point in this application may be a high efficiency (high efficient, HE) AP, an extremely high throughput (extremely high throughput, EHT) AP, or an access point applicable to a future generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television, a smart wearable device, a vehicle-mounted communication apparatus, or a computer that supports a Wi-Fi communication function. Optionally, the station may support the 802.11be standard. Alternatively, the station may support the plurality of WLAN standards of the 802.11 family, for example, 802.11ax, 802.11ac, 802.11n, 802.11g, 802.11b, 802.11a, and the next generation of 802.11be.

To facilitate understanding of the technical solutions in this application, related concepts and technologies in this application are first briefly described.

A sensing initiator is a station that initiates a sensing process.

sensing initiator: a STA that initiates a WLAN sensing procedure.

A sensing responder is a station that participates in the sensing process initiated by the sensing initiator.

sensing responder: a STA that participates in a WLAN sensing procedure initiated by a sensing initiator.

A sensing transmitter is a station that sends a physical layer protocol data unit (physical layer protocol data unit, PPDU) for sensing measurement in the sensing process.

sensing transmitter: a STA that transmits PPDUs used for sensing measurements in a sensing procedure.

A sensing receiver is a station that receives the PPDU sent by the sensing transmitter and performs sensing measurement in the sensing process.

sensing receiver: a STA that receives PPDUs sent by a sensing transmitter and performs sensing measurements in a sensing procedure.

In addition, a trigger frame in this application may be expressed as a triggering frame and a trigger frame in the 802.11 standard. The trigger frame is a form of the triggering frame. The triggering frame may be interpreted as a trigger frame or a frame that carries a TRS control subfield (triggering frame: a trigger frame or a frame carrying a TRS Control subfield). TRS represents triggered response scheduling (triggered response scheduling). The trigger frame mentioned in this specification includes the foregoing two forms of trigger frames. This is not limited.

For example, the trigger frame includes a common information (common info) field and a user information list (user info list) field. The trigger frame may further include one or more of the following: a frame control (frame control) field, a duration (duration) field, a receive address (receive address, RA) field, a transmit address (transmit address, TA) field, a padding (padding) field, a frame check sequence (frame check sequence, FCS) field, or the like. In 802.11ax, when an AP sends a PPDU including a trigger frame encoded in a binary convolutional code (binary convolutional code, BCC) scheme, it indicates that the AP is to request a response from a non-AP STA. In this case, the AP needs to ensure that a quantity of bits following a last bit of an SCH in a physical layer service data unit (PHY service data unit, PSDU) reaches at least $L_{PAD,MAC}$. The SCH is defined as either of the following:

(1) a user information list field that points to the STA and that is in a last or only trigger frame; and
(2) a last TRS control (TRS control) subfield in the PSDU.

$L_{PAD,MAC}$ follows the following calculation mode:

$$L_{PAD,MAC} = N_{DBPS} m_{PAD}$$

$N_{DBPS}$ represents a data bit of a symbol in a non-high-throughput (high-throughput, HT), HT, or very high throughput (very high throughput, VHT) PPDU, or a high efficient physical layer protocol data unit (high efficient physical layer protocol data unit, HE PPDU). If a high efficient multiple user physical layer protocol data unit (high efficient multiple user physical layer protocol data unit, HE MU PPDU) is represented, $N_{DBPS}$ may be replaced with $N_{DBPS,u}$, indicating a value of a corresponding user u.

For a non-HT, HT, or VHT PPDU, $m_{PAD}$ may be expressed in the following manner:

$$m_{PAD} = \begin{cases} 0, \text{if } MinTrigProctime=0 \\ 2, \text{if } MinTrigProctime = 8 \text{ microseconds} \\ 4, \text{if } MinTrigProctime = 16 \text{ microseconds} \end{cases}$$

For the HE PPDU, $m_{PAD}$ may be expressed in the following manner:

$$m_{PAD} = \begin{cases} 0, \text{if } MinTrigProctime=0 \\ 1, \text{if } MinTrigProctime = 8 \text{ or } 16 \text{ microseconds} \end{cases}$$

A specific value of $m_{PAD}$ is notified based on a corresponding trigger frame MAC padding subfield in a MAC capability information indication field. This field has 2 bits, and a requirement of a padding bit that may be notified is 0 microseconds, 8 microseconds, or 16 microseconds, that is, *MinTrigProctime* is notified.

A reason why the formula for determining a value of $m_{PAD}$ is generated is that in comparison with an original PPDU, duration corresponding to one symbol in the HE PPDU is longer. For example, duration of a symbol of the original PPDU may be 4 microseconds, but for the HE PPDU, the duration corresponding to the symbol may be 16 microseconds. Therefore, when there are different duration requirements, the corresponding requirements can be satisfied by using the formula of $m_{PAD}$.

In addition, in a WLAN sensing technology, a sensing procedure may support a trigger-based sensing procedure and a non-trigger-based sensing procedure. In the trigger-based sensing procedure, a trigger frame may be used to trigger feedback from a peer device.

In the trigger-based sensing procedure, after processes such as capability exchange confirmation and measurement setup, sensing devices may perform a procedure of sending and receiving a sensing measurement instance based on the trigger frame. The following provides two examples of the procedure of the measurement instance.

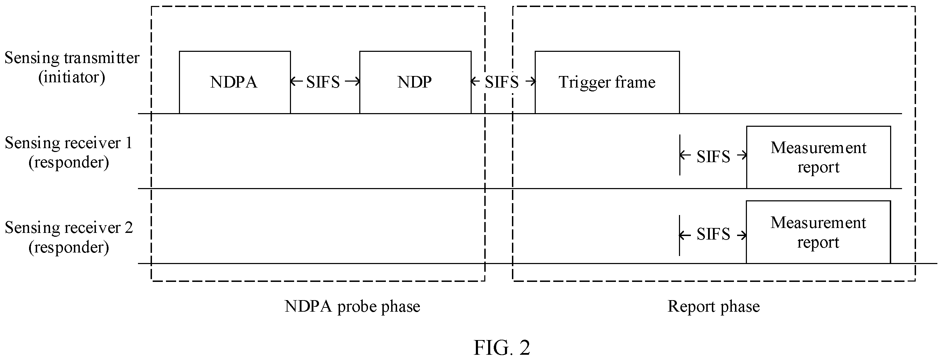

FIG. 2 is an example of a procedure of a sensing measurement instance.

As shown in FIG. 2, in a null data packet announcement (null data packet announcement,

NDPA) probe phase, a sensing initiator sends an NDPA and a null data packet (null data packet, NDP) to a sensing responder. In this case, the sensing responder may be a sensing receiver, and the sensing initiator may be a sensing transmitter. In FIG. 2, two sensing receivers are used as an example, for example, a sensing receiver 1 and a sensing receiver 2. The sensing initiator sends a trigger frame to the sensing responder in a reporting phase to trigger feedback of sensing content. The sensing responder may feed back a measurement report in the reporting phase. For example, the measurement report that is fed back may include channel state information (channel state information, CSI). In addition, FIG. 2 shows only an example in which a time interval between two of the NDPA, the NDP, the trigger frame, and the measurement report that are adjacent to each other is a short interframe space (short interframe space, SIFS).

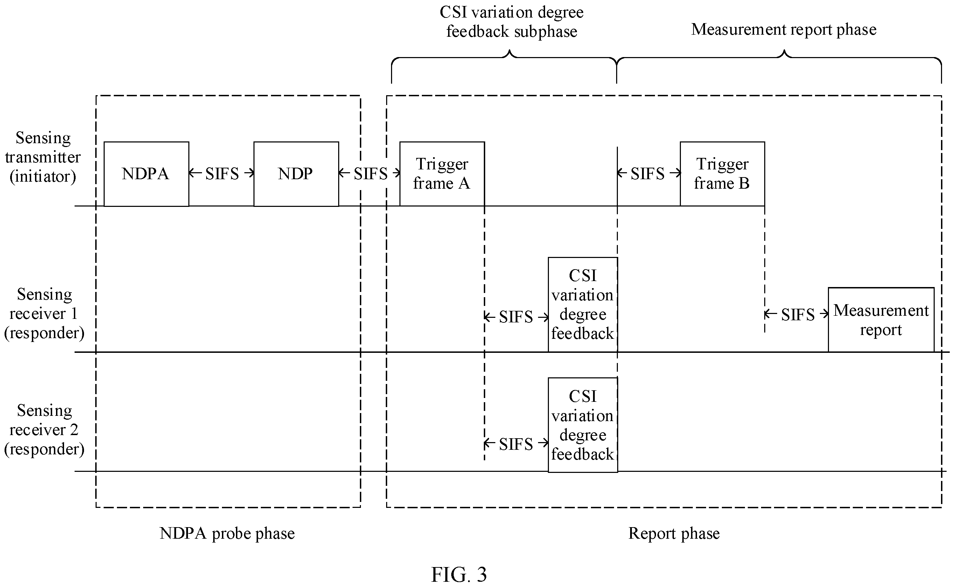

FIG. 3 is another example of a procedure of a sensing measurement instance.

As shown in FIG. 3, in an NDPA probe phase, the sensing initiator sends the NDPA and the NDP to the sensing responder. In a CSI variation degree feedback subphase of the reporting phase, the sensing initiator sends a trigger frame A, and the trigger frame A triggers the sensing receiver to feed back a CSI variation degree. In addition, the sensing initiator sends a threshold to the sensing receiver. The threshold is used to select the sensing receiver that needs to feed back the sensing content subsequently. Based on the trigger frame A, the sensing receiver 1 feeds back a CSI variation degree, and the sensing receiver 2 feeds back a CSI variation degree. In addition, the sensing receiver 1 compares the CSI variation degree sensed by the sensing receiver 1 with the threshold from the sensing initiator, and the sensing receiver 2 compares the CSI variation degree sensed by the sensing receiver 2 with the threshold from the sensing initiator. If the CSI variation degree is less than the threshold, the sensing receiver does not need to prepare a frame for feeding back the sensing content after a CSI variation degree feedback. If the CSI variation degree is greater than or equal to the threshold, the sensing receiver needs to prepare a frame for feeding back the sensing content after a CSI variation degree feedback. For example, the CSI variation degree sensed by the sensing receiver 2 is less than the threshold, and the CSI variation degree sensed by the sensing receiver 1 is greater than the threshold. The sensing receiver 1 feeds back the CSI variation degree, and the sensing receiver 2 feeds back the CSI variation degree. Because the CSI variation degree sensed by the sensing receiver 2 is less than the threshold, the sensing receiver 2 does not prepare a subsequent frame for feeding back the sensing content, and the sensing receiver 1 prepares a subsequent frame for feeding back the sensing content. The sensing initiator receives the CSI variation degrees fed back by the sensing receiver 1 and the sensing receiver 2, and compares the CSI variation degrees with the set threshold. Through comparison, it is found that the CSI variation degree from the sensing receiver 1 is greater than the threshold, and the CSI variation degree from the sensing receiver 2 is less than the threshold. Therefore, the sensing initiator triggers, via a trigger frame B, the sensing receiver 1 to feed back the sensing content. It can be found that the sensing initiator selects, based on the set threshold, the sensing receiver that needs to feed back the sensing content. The sensing receiver 1 feeds back, based on the trigger frame B, the sensing content to the sensing initiator. For example, the sensing receiver 1 feeds back CSI obtained by measuring the NDP.

Two feedback modes are related to a feedback procedure of a trigger-based sensing procedure: an immediate feedback mode and a delayed feedback mode, and may also be referred to as an immediate mode and a delayed mode for short. A device that receives the trigger frame notifies, based on a capability of the device, a peer device that the device can immediately provide feedback or needs to delay feedback. For example, in the immediate mode, a result of a PPDU in a current or latest measurement is fed back; and in the delayed mode, a result of a PPDU in a previous measurement is fed back. The measured PPDU may be the NDP (null data PPDU). Optionally, the immediate mode and the delayed mode may alternatively be understood as feeding back, in a same measurement instance or next y (y is an integer greater than or equal to 1) measurement instances, sensing content that is fed back as triggered by the trigger frame in a current measurement instance, for example, feeding back a sensing measurement result.

To resolve a problem that in the delayed mode, feedback efficiency is low because content that is fed back as triggered by the trigger frame in the current measurement instance needs to be delayed to a subsequent measurement instance for feedback, this application provides a communication solution, to improve sensing feedback efficiency.

In this application, it is considered that padding for sensing is added to the trigger frame, so that a feedback procedure is more efficient. More devices can support immediate feedback through padding for sensing. In addition, a padding bit for sensing may change dynamically (for example, a non-AP STA may use the delayed mode in some cases and the immediate mode in other cases). The following describes in detail the solutions proposed in this application.

A first device mentioned in embodiments of this application is an example of a sensing receiver, and a second device is an example of a sensing transmitter. In other words, the first device is a device that receives a trigger frame used to trigger sensing feedback, and the second device is a device that sends a trigger frame used to trigger sensing feedback. Details are not described below again. For example, the first device may be a STA, and the second device may be an AP, for example, the AP 1 and the STA 1. Alternatively, both the first device and the second device are STAs in FIG. 1, for example, the STA 2 and the STA 3. Alternatively, both the first device and the second device are APs, for example, the AP 1 and the AP 2.

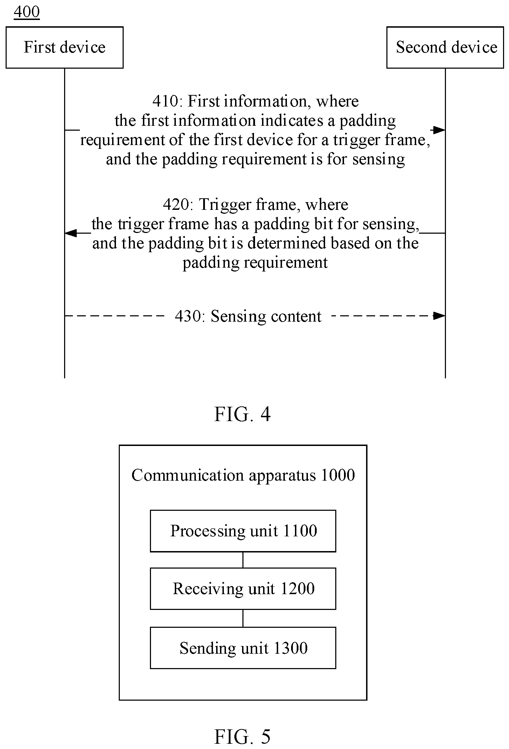

FIG. 4 is a schematic flowchart of a communication method according to this application.

410: A first device sends first information to a second device, where the first information indicates a padding requirement of the first device for a trigger frame, and the padding requirement is for sensing. The trigger frame is used to trigger the first device to send sensing content. For example, the sensing content may include one or more of the following: CSI, a truncated channel impulse response (truncated channel impulse response, TCIR), or a filtering graph. The filtering graph includes one or more pieces of information of a distance, an azimuth, a height, or Doppler information. For example, the filtering graph may be two-dimensional, three-dimensional, or four-dimensional.

Optionally, the trigger frame may have a padding bit for one or more purposes. In embodiments of this application, unless otherwise specified, the padding bit is a padding bit for sensing. The padding bit for sensing may also be understood as a padding bit added to the trigger frame to enable a sensing receiver to perform sensing feedback in an immediate mode. In a possible implementation, the padding bit for sensing may be included in the trigger frame, for example, included in a padding field carried in the trigger frame. In another possible implementation, the padding bit for sensing may be included in a post-EOF A-MPDU (aggregate media access control (MAC) protocol data unit) padding field. EOF indicates an end of frame (end of frame). In another possible implementation, the padding bit for sensing may be located after the trigger frame. For example, in the A-MPDU, another MPDU is aggregated after the A-MPDU. The another MPDU aggregated after the A-MPDU is considered as the padding bit for sensing. Alternatively, the trigger frame has the padding bit for sensing, or it may be considered that the trigger frame is associated with the padding bit for sensing. In other words, a location of the padding bit for sensing is not necessarily located in the trigger frame, but is added by a sensing transmitter to the trigger frame for sensing.

In a possible implementation solution, it can be learned from the foregoing descriptions of the immediate mode and the delayed mode that in the technical solutions provided in this application, the padding bit for sensing is added to the trigger frame, so that the sensing receiver can perform sensing feedback in the immediate mode. In other words, the technical solutions provided in this application are an immediate mode that satisfies a specific padding requirement.

Specifically, the sensing receiver sends the first information to the sensing transmitter. The first information indicates the padding requirement for sensing of the sensing receiver for the trigger frame.

Optionally, in this application, the padding requirement for sensing may be represented as a time length, a bit quantity, a byte quantity, or the like. A unit of the time length may be a microsecond, a slot, or another form. In addition, the padding requirement for sensing may alternatively be another parameter related to the time length, for example, a value of $m_{PAD}$ described below. For example, for the parameters related to the time length, the time length may be obtained by performing some conversion and/or calculation on the parameters. A specific form of the padding requirement is not limited in this application, and a person skilled in the art may alternatively use another manner.

420: The first device receives the trigger frame from the second device, where the trigger frame has the padding bit for sensing, and the padding bit is determined based on the padding requirement.

Optionally, the method 400 may include step 430.

430: The first device sends, based on the trigger frame, the sensing content to the second device in the immediate mode.

In the technical solutions of this application, before the sensing transmitter sends the trigger frame used to trigger sensing feedback, the sensing transmitter learns in advance of the padding requirement of the sensing receiver for the trigger frame, to determine the padding bit of the trigger frame based on the padding requirement. In this way, after the padding bit is added, it can be ensured that the sensing receiver can perform sensing feedback in the immediate mode, thereby improving feedback efficiency.

In this application, there may be a plurality of specific solutions in which the first information indicates the padding requirement of the first device for the trigger frame.

The following describes several different solutions.

Solution 1

The first information indicates one or more of the following:

a first index value, where the first index value indicates the immediate mode and the padding requirement of the first device for the trigger frame;
a second index value, where the second index value indicates the immediate mode and no padding requirement; and
a third index value, where the third index value indicates the delayed mode and no padding requirement.

In embodiments of this application, the immediate mode and the delayed mode are two feedback modes used when the first device feeds back the sensing content based on the trigger frame. The immediate mode indicates that the first device may feed back, in a current measurement instance, the sensing content that is fed back as triggered. The delayed mode indicates that the first device feeds back, in next y measurement instances, the sensing content that is fed back as triggered in the current measurement instance. No padding requirement indicated by the second index value or the third index value may mean that a minimum requirement of the first device for the padding bit for sensing is zero. In the immediate mode or the delayed mode in this case, the trigger frame sent by the second device may not have the padding bit for sensing.

It should be noted that, in this application, that the first device has no padding requirement for the trigger frame means that the first device has no padding requirement for sensing for the trigger frame. However, determining of another padding requirement other than the padding requirement for sensing may be the same as a stipulation in a related standard related to a WLAN system, for example, the same as that in the 802.11ax or 802.11be standard. In a possible implementation, based on an indication of the first information from the first device, when the second device sends the trigger frame for sensing, the trigger frame only needs to satisfy the padding requirement for sensing indicated by the first information, and the another padding requirement stipulated in 802.11ax does not need to be considered. In another possible implementation, based on an indication of the first information from the first device, when the second device sends the trigger frame for sensing, the second device considers, for a padding part of the trigger frame, both the padding requirement for sensing and the another padding requirement stipulated in 802.11ax. For example, in this case, the padding requirement in the trigger frame is a sum of the padding requirement for sensing and the another padding requirement. In this case, the padding requirement of the first device for the trigger frame may be considered as a padding requirement for sensing that needs to be additionally satisfied on a basis that the padding requirement stipulated in 802.11ax is satisfied. In still another possible implementation, in the delayed mode, the first device does not have an additional padding requirement for sensing for the trigger frame (for example, the minimum requirement for the padding bit for sensing is zero). However, the trigger frame needs to satisfy a padding requirement that is stipulated in 802.11ax and that needs to be satisfied by all trigger frames, and the padding requirement may be indicated by an existing related field.

Optionally, in an example of Solution 1, the first index value indicated by the first information may be any one of ID=1 to ID=5 shown in Table 1.

For example, the first index value is 1, that is, the padding requirement indicated by the first index value is 16 $\mu$s. The first index value is 2, that is, the padding requirement indicated by the first index value is 32 $\mu$s.

For example, the second index value may be ID=0 in Table 1, where ID=0 indicates the immediate mode. In this case, the first device has no padding requirement for the trigger frame. That is, the second index value indicates the immediate mode and no padding requirement.

For example, the third index value may be ID=7 in Table 1, where ID=7 indicates the delayed mode. In this case, the first device has no padding requirement for the trigger frame. That is, the third index value indicates the delayed mode and no padding requirement.

For example, ID=0 to ID=7 may be 3 bits, the 3 bits have eight values, and the eight values separately indicate padding requirements and feedback modes shown in Table 1.

**Table 1**

| First index value, second index value, or third index value | Padding requirement and a feedback mode indicated by the first index value, the second index value, or the third index value |
|---|---|
| ID=0 | Immediate mode (0 $\mu$s) |
| ID=1 | Immediate mode and 16 $\mu$s |
| ID=2 | Immediate mode and 32 $\mu$s |
| ID=3 | Immediate mode and 64 $\mu$s |
| ID=4 | Immediate mode and 128 $\mu$s |
| ID=5 | Immediate mode and 256 $\mu$s |
| ID=6 | Reserved |
| ID=7 | Delayed mode (0 $\mu$s) |

As shown in Table 1, "immediate mode (0 $\mu$s)" indicates an immediate mode without a padding requirement, and "delayed mode (0 $\mu$s)" indicates a delayed mode without a padding requirement. Another immediate mode is an immediate mode with a padding requirement. For example, "immediate mode and 16 $\mu$s" indicates that a padding requirement is 16 $\mu$s and is the immediate mode; and "immediate mode and 32 $\mu$s" indicates that a padding requirement is 32 $\mu$s and is the immediate mode.

Optionally, in this solution, in an implementation, the first information indicates only one first index value. Optionally, the first information further indicates the second index value and the third index value.

It should be noted that values of IDs in Table 1 and Table 2 are merely examples, and may alternatively be other values, provided that different padding requirements can be distinguished, or the immediate mode without the padding requirement or the delayed mode without the padding requirement can be distinguished. In addition, one or more of the first index value, the second index value, and the third index value may alternatively be replaced with another representation manner other than a number, for example, a letter or a character string. For example, the second index value may alternatively be replaced with a character string "immediate feedback", "no need for additional padding", "immediate mode", or the like; and the third index value may be replaced with "delayed feedback", "delayed mode", or the like. This is not limited.

In addition, in Table 1, ID=0 may be understood as a special case. In this case, it indicates that there is no padding bit requirement, and also indicates the immediate mode.

In addition, in Table 1, different values of IDs indicate different padding requirements, and a person skilled in the art may alternatively think of another implementation of indicating different padding requirements. For example, the padding requirement indicated by the first index value may be represented by using the time length (for example, the time length in the unit of a microsecond in Table 1), or may be represented by using another parameter. For example, the padding requirement may alternatively be represented by using the bit quantity or the byte quantity, or may alternatively be represented by using another parameter related to the time length, for example, the value of $m_{PAD}$ described above. In other words, whether a specific form, indicated by the first information, of the padding requirement of the first device for the trigger frame is unique is not limited, and a person skilled in the art may alternatively use another manner. This is not limited.

Optionally, if the padding requirement indicated by the first index value is represented by using the parameter $m_{PAD}$, the padding requirement indicated by the first index value, the second index value, or the third index value may be shown in Table 2:

**Table 2**

| First index value, second index value, or third index value (SP_DELAY) | Padding requirement indicated by the first index value, the second index value, or the third index value |
|---|---|
| ID=0 | Immediate mode ($m_{PAD}$=0) |
| ID=1 | Immediate mode and $m_{PAD}$=1 |
| ID=2 | Immediate mode and $m_{PAD}$=2 |
| ID=3 | Immediate mode and $m_{PAD}$=3 |
| ID=4 | Immediate mode and $m_{PAD}$=4 |
| ID=5 | Immediate mode and $m_{PAD}$=5 |
| ID=6 | Immediate mode and $m_{PAD}$=6 |
| ID=7 | Delayed mode ($m_{PAD}$=0) |

As shown in Table 2, ID=0 is an example of the second index value, and "immediate mode $(m_{PAD}$=0)" indicates the immediate mode without the padding requirement. ID=7 is an example of the third index value, and "delayed mode $(m_{PAD}$=0)" indicates the delayed mode without the padding requirement. ID=1 to ID=6 are examples of first index values, and immediate modes corresponding to the first index value are immediate modes with padding requirements, for example, "immediate mode and $m_{PAD}$=1" to "immediate mode and $m_{PAD}$=6". A specific padding requirement is determined based on a value (for example, SP_DELAY) of each index value. For example, SP_DELAY indicates a sensing padding delay subfield value (sensing padding delay subfield value), and may be indicated in a capability exchange phase. In other words, in this embodiment, the first information may be specifically SP_DELAY. It should be understood that the value of the ID in Table 2 is a value of SP_DELAY. Optionally, "the first information indicates one or more of the first index value, the second index value, and the third index value" may be replaced with "the first information indicates SP_DELAY".

For example, a process of determining the padding requirement based on the value of SP_DELAY may be as follows:

$$L_{PAD,MAC} = N_{DBPS} m_{PAD} \quad (1)$$

$$m_{PAD} = \begin{cases} 0, \text{if SP\_DELAY is 0} \\ 2^{SP\_DELAY-1}, \text{another value} \end{cases} \quad (2)$$

It can be learned that the value of $m_{PAD}$ is determined based on the value of SP_DELAY and according to the formula (2). Further, $L_{PAD,MAC}$ may be determined according to the formula (1). It should be noted that, in Table 2, an example in which $N_{DBPS}$ corresponds to 16 microseconds in the formula (1) is used for description, and $N_{DBPS}$ may alternatively be another value. This is not limited.

In addition, SP_DELAY may be used to calculate $m_{PAD}$ in another manner, for example, a linear relationship, an exponential relationship, and a logarithmic relationship. In addition, the linear relationship, the exponential relationship, the logarithmic relationship, or another calculation manner may also be satisfied between $m_{PAD}$ and $L_{PAD,MAC}$. The formula (1) and the formula (2) are merely used as examples.

It can be learned that different values of $L_{PAD,MAC}$ are obtained through calculation by using different values of SP_DELAY, and different values of $L_{PAD,MAC}$ correspond to different padding requirements.

Herein, the formula (1) and the formula (2) are also applicable to the following embodiments. Details are not described again. For example, with reference to the formula (1), $m_{PAD}$ in the following Table 3 to Table 5 may be converted into a requirement for the padding bit for sensing.

It should be understood that Table 2 is merely an example provided for ease of understanding a padding requirement and a feedback mode indicated by each index value.

Optionally, in step 210, that a first device sends first information to a second device may be at any suitable phase of a trigger-based sensing procedure, for example, a phase in a capability indication phase, or a phase before the capability indication phase. For example, the first information may be information used for capability exchange, and may be exchanged via frames such as an association request (association request) frame, a probe request (probe request) frame, or a sensing measurement setup (sensing measurement setup) frame. In addition, the first information may be carried in different types of frames, for example, a control frame, a management frame, and a data frame. This is not limited. More specifically, the first information may be carried in a high efficient (high efficient, HE) capability element and an extremely high throughput (extremely high throughput, EHT) capability element in a PPDU. For example, these elements include a sensing capability element, and the first information may be carried in the sensing capability element.

Optionally, the first information indicates the padding requirement of the first device for the trigger frame. In addition, the first device may further indicate, to the second device, a mode for sending the sensing content. Optionally, the first information and information (for example, second information) indicating a feedback mode for the sensing content may be indicated independently of each other, or may be indicated jointly. This is not limited.

In addition, it should be noted that the padding requirement of the first device for the trigger frame is not only applicable to the immediate mode, but also applicable to the delayed mode. This is not limited. For example, it can be learned from the foregoing description that, in the technical solutions provided in this application, the first device may feed back the sensing content to the second device in the immediate mode. The immediate mode is an immediate mode that satisfies the padding requirement for sensing of the first device for the trigger frame. When the padding requirement of the first device for the trigger frame is applicable to the delayed mode, the first device sends the first information to the second device. The first information indicates the padding requirement for sensing of the first device for the trigger frame and the delayed mode.

Optionally, in some other solutions, the first information may indicate a mapping relationship between requirement information and one or more elements, for example, the following Solution 2. The requirement information is used to determine the padding bit for sensing and the feedback mode. The feedback mode may include the immediate mode or the delayed mode. The element includes one or more of the following: a spatial stream quantity, a resource unit size, the bit quantity, a bit quantity range, and the like.

Optionally, in each embodiment in which the element is the bit quantity, the bit quantity may be a bit quantity fed back by the first device, for example, a bit quantity of CSI fed back by the first device. Alternatively, the bit quantity may be a bit quantity used in calculation related to sensing feedback, for example, a bit quantity used in calculation when the first device feeds back a CSI variation degree. This is not limited.

In this application, the "element" refers to a component that needs to be paid attention to when the padding bit for sensing is considered. The elements listed herein are merely examples, and may alternatively be other elements. This is not limited.

Solution 2

The first information indicates the mapping relationship between the requirement information and the element, and the requirement information is used to determine the padding bit for sensing and the feedback mode.

Implementation 1

The first information indicates a mapping relationship between R pieces of requirement information and R elements, the R pieces of requirement information one-to-one correspond to the R elements, and R is a positive integer.

The following uses Table 3 as an example for description.

**Table 3**

| Element (bit quantity range) | Requirement information |
|---|---|
| [a0, b0] | Immediate mode and $m_{PAD}$=A |
| [a1, b1] | Immediate mode and $m_{PAD}$=B |
| [a2, b2] | Immediate mode and $m_{PAD}$=C |
| [a3, b3] | Immediate mode and $m_{PAD}$=D |
| [a4, b4] | Immediate mode and $m_{PAD}$=E |
| [a5, b5] | Immediate mode and $m_{PAD}$=F |
| [a6, b6] | Immediate mode and $m_{PAD}$=G |

(continued)

| Element (bit quantity range) | Requirement information |
|---|---|
| [a7, b7] | Immediate mode and $m_{PAD}$=H |

As shown in Table 3, it is assumed that the first information indicates eight pieces of requirement information and eight elements. The eight pieces of requirement information are: the immediate mode and $m_{PAD}$=A, the immediate mode and $m_{PAD}$=B, ..., and the immediate mode and $m_{PAD}$=H; and the eight elements are: [a0, b0], [a1, b1], ..., and [a7, b7]. In this example, the element is the bit quantity range. Each bit quantity range uniquely corresponds to one piece of requirement information, and each piece of requirement information may be used to determine the padding requirement of the first device for the trigger frame.

Optionally, in this implementation, the first information may further indicate a value of R. For example, in Table 3, R is 8.

Optionally, the R elements may be same elements. For example, when the element is the bit quantity range, the R elements are R bit quantity ranges, and each bit quantity range corresponds to one of the R pieces of requirement information. It is assumed that the R bit quantity ranges include a first bit quantity range [a1, b1], and the first bit quantity range [a1, b1] corresponds to first requirement information in the R pieces of requirement information, that is, the immediate mode and $m_{PAD}$=B. It indicates that if a quantity of bits actually processed by the first device is within the range [a1, b1], the trigger frame needs to satisfy a padding requirement determined based on $m_{PAD}$=B. In this case, the first device may feed back the sensing content in the immediate mode. For example, [a1, b1] is [5000, 10000], and the padding requirement determined based on $m_{PAD}$=B is 16 $\mu$s. This indicates that the quantity of bits processed by the first device is between 5000 bits and 10000 bits, and padding requirements of the first device for the trigger frame are all 16 $\mu$s. In this case, the first device may feed back the sensing content in the immediate mode. For another example, [a2, b2] is [10001, 100000], and the padding requirement determined based on $m_{PAD}$=C is 32 $\mu$s. This indicates that the quantity of bits processed by the first device is between 10001 bits and 100000 bits, and padding requirements of the first device for the trigger frame are all 32 $\mu$s. In this case, the first device may feed back the sensing content in the immediate mode.

Optionally, based on Table 3, the immediate mode and the delayed mode are compatible, and the mapping relationship indicated by the first information may be shown in Table 4 or Table 5. It should be understood that Table 4 and Table 5 are merely examples of the mapping relationship between the element and the requirement information, and do not limit a specific mapping relationship. For example, when the element is the bit quantity range, the mapping relationship between the bit quantity range and the requirement information may satisfy one row, several rows, or all rows in Table 4 or Table 5.

**Table 4**

| Element (bit quantity range) | Requirement information |
|---|---|
| [a0, b0] | Immediate mode and $m_{PAD}$=0 |
| [a1, b1] | Immediate mode and $m_{PAD}$=A |
| [a2, b2] | Immediate mode and $w_{PAD}$=B |
| [a3, b3] | Immediate mode and $m_{PAD}$=C |
| [a4, b4] | Immediate mode and $m_{PAD}$=D |
| [a5, b5] | Immediate mode and $m_{PAD}$=E |
| [a6, b6] | Immediate mode and $m_{PAD}$=F |
| [a7, b7] | Delayed mode and $m_{PAD}$=0 |

**Table 5**

| Element (bit quantity range) | Requirement information |
|---|---|
| 0 to a | Immediate mode and $m_{PAD}$=0 |
| a to b | Immediate mode and $m_{PAD}$=A |
| b to c | Immediate mode and $m_{PAD}$=B |
| c to +$\infty$ | Delayed mode and $m_{PAD}$=0 |

For example, in Table 4 or Table 5, boundary values (for example, a0, b0, a1, b1, ..., a7, and b7 in Table 4, or a, b, c, and +oo in Table 5) of bit quantity ranges may be indicated by using several quantities of bits (for example, x bits). For example, 4 bits (that is, x=4) indicate these boundary values, and every two boundary values correspond to one bit quantity range. It may be understood that the 4 bits may represent 16 indexes, which are sequentially 0 to 15, and each index corresponds to one boundary value.

Table 5 is used as an example. In an implementation, the bit quantity range may be indicated in a form in which 2 is a base and an index represented by the x bits is a power of an exponent. In other words, boundary values of each bit quantity range are values whose bases are 2 and whose powers of exponents are indexes. The 4 bits are used as an example. In this implementation, a maximum bit quantity range that can be indicated may reach $2^{15}$. In another implementation, another boundary value other than +oo is a value whose base is 2 and whose power of an exponent is the index represented by the x bits, and one of a plurality of indexes represented by the x bits may directly indicate positive infinity or 0. Still, that is, x=4 is used as an example. The 4 bits may represent indexes 0 to 15, the last index 15 may be selected to directly indicate the positive infinity, and the first index 0 is selected to indicate 0.

To further reduce indication overheads, a to-be-indicated bit quantity range may be expanded based on a positive integer w, where w may be a preset or default value, for example, w=10. For example, a bit quantity range in a first row in Table 5 is used as an example, and the bit quantity range may reach $2^{a+w}$. A bit quantity less than $2^w$ complies, by default, with requirement information corresponding to the bit quantity range in the first row, and a quantity of bits indicating these boundary values may be reduced by setting w, to achieve an objective of using a small bit quantity to indicate a large bit quantity range.

In addition, for example, $m_{PAD}$=A represents that the padding requirement is 32 microseconds, and $m_{PAD}$=B represents that the padding requirement is 128 microseconds.

Implementation 2

The first information indicates the element, and there is the mapping relationship between the element and the requirement information.

The requirement information is used to determine the padding bit and the feedback mode. The element includes one or more of the spatial stream quantity, the RU size, the bit quantity, and the bit quantity range, and the feedback mode includes the immediate mode or the delayed mode.

In Implementation 2, the first information indicates only the element, but there is the mapping relationship between the element and the requirement information. The mapping relationship may be preset. The first device indicates the element to the second device, and the second device may determine the feedback mode and the padding requirement of the first device for the trigger frame based on the preset mapping relationship. The feedback mode includes the immediate mode or the delayed mode.

Table 5 is used as an example. Four pieces of requirement information are preset: the immediate mode and $m_{PAD}$=0, the immediate mode and $m_{PAD}$=A, the immediate mode and $m_{PAD}$=B, and the delayed mode and $m_{PAD}$=0. The immediate mode and $m_{PAD}$=A and the immediate mode and $m_{PAD}$=B indicate the immediate mode with the padding requirement, and the remaining two pieces of requirement information indicate the immediate mode without the padding requirement or the delayed mode. In Implementation 2, the first information indicates four bit quantity ranges: 0 to a, a to b, b to c, and c to +∞. It is assumed that the preset mapping relationship between elements and the requirement information is that the four elements indicated by the first information respectively correspond to the immediate mode and $m_{PAD}$=0, the immediate mode and $m_{PAD}$=A, the immediate mode and $m_{PAD}$=B, and the delayed mode and $m_{PAD}$=0 in a front-to-back order. If a sequence of the elements indicated by the first information is 0 to a, a to b, b to c, and c to +∞, when the first information indicates only the element, the first information may also indicate the mapping relationship between the requirement information and the element in Table 5.

Implementation 3

The first information indicates the requirement information, and there is the mapping relationship between the requirement information and the element.

In Implementation 3, the first information indicates only the requirement information, but there is the mapping relationship between the requirement information and the element, and the relationship may also be preset. The first device indicates the requirement information to the second device, and the second device may determine the feedback mode and the padding requirement of the first device for the trigger frame based on the preset mapping relationship. The feedback mode includes the immediate mode or the delayed mode.

Table 5 is used as an example. A mapping relationship between four elements and four pieces of requirement information is preset, and the elements are bit quantity ranges: 0 to a, a to b, b to c, and c to +co . In Implementation 3, the first information indicates the four pieces of requirement information: the immediate mode and $m_{PAD}$=0, the immediate mode and $m_{PAD}$=A, the immediate mode and $m_{PAD}$=B, and the delayed mode and $m_{PAD}$=0. The immediate mode and $m_{PAD}$=A and the immediate mode and $m_{PAD}$=B indicate the immediate mode with the padding requirement, and the remaining two pieces of requirement information indicate the immediate mode without the padding requirement or the delayed mode. It is assumed that the preset mapping relationship is that the four pieces of requirement information indicated by the first information respectively one-to-one correspond to the four elements 0 to a, a to b, b to c, and c to +∞. If a sequence of the elements indicated by the first information is the immediate mode and $m_{PAD}$=0, the immediate mode and $m_{PAD}$=A, the immediate mode and $m_{PAD}$=B, and the delayed mode and $m_{PAD}$=0, when the first information indicates only the requirement information, the mapping relationship between the requirement information and the element in Table 5 may also be indicated, to reduce indication overheads.

It can be learned that in Solution 2, there is the mapping relationship between the R pieces of requirement information and the R elements. The first information may indicate the mapping relationship, the mapping relationship is agreed upon between the first device and the second device, or the mapping relationship is preconfigured. The first information indicates the element or the requirement information, or may indicate the feedback mode and the padding requirement of the first device for the trigger frame. In embodiments of this application, unless otherwise specified, the trigger frame in the delayed mode does not have the padding bit for sensing, or in other words, the delayed mode has no padding requirement.

In Solution 2, an example in which the element is the bit quantity range is used for description. Alternatively, the element may be the bit quantity, the RU size, the spatial stream quantity, or the like. Specific implementations are similar. Details are not described again.

Optionally, the R elements in Solution 2 may alternatively be different elements. For example, when different padding requirements are determined based on different bit quantity ranges, once an RU is greater than a size, or the spatial stream quantity is greater than a threshold, the requirement information indicates the delayed mode. It can be learned that in this case, the R pieces of requirement information not only have the mapping relationship with bit quantity ranges, but also have a mapping relationship with RU sizes or spatial stream quantities. In this case, the R pieces of requirement information have a mapping relationship with a plurality of elements.

Optionally, in an example, a mapping relationship between the element and the padding requirement indicated by the requirement information may be linear.

For example, the element is the bit quantity. When the first information indicates that the bit quantity fed back by the first device is p, additional duration, that is, q microseconds, is required. Optionally, one of p and q may be fixedly set, and the other is indicated by the first information. Alternatively, both p and q are indicated by the first information. If the first device notifies, via the first information, the second device that it takes q microseconds for the first device to feed back p bits, the second device may know a quantity of padding bits for sensing that need to be at least added if the padding requirement of the first device for the trigger frame needs to be satisfied. The quantity of padding bits for sensing that need to be at least added may be represented by duration.

For example, when the mapping relationship is a linear mapping relationship, duration that needs to be at least increased may be determined according to the following formula (3):

(a quantity of bits that actually need to be processed/p)·q (3)

In this example, it is assumed that p=5000 and q is 4 microseconds. When the second device sends the trigger frame, the duration that needs to be at least increased is (a quantity of bits that actually need to be processed/5000) ·4 microseconds.

In addition, when the duration that needs to be at least increased is calculated according to the formula (2), a value corresponding to (a quantity of bits that actually need to be processed/p) may be further simplified according to a specification, for example, rounded up or rounded down, or simplified after calculation according to the formula (3) is completed, or set to a multiple of a value according to a specification. This is not limited.

Optionally, in another example, a mapping relationship between the element and the padding requirement determined based on the requirement information may be non-linear.

For example, the element is the bit quantity. For example, the mapping relationship between the bit quantity and the padding requirement may be calculated according to a formula (4):

((a quantity of bits that actually need to be processed-r)/p)·q (4)

r is a threshold of a preset bit quantity.

It may be found according to the formula (4) that when a quantity of bits that actually need to be processed by the first device is less than the threshold r, the first device has no padding requirement for the trigger frame.

In addition, optionally, in any implementation of the foregoing Solution 2, a more direct mapping relationship may be satisfied between the requirement information and the element. For example, the mapping relationship may be:

When a representation value of the element is greater than or equal to a specified threshold of the element, the padding requirement indicated by the requirement information or the feedback mode is fixedly set; and/or

when the representation value of the element is less than or equal to the specified threshold of the element, the padding requirement indicated by the requirement information or the feedback mode is fixedly set.

Optionally, the padding requirement indicated by the requirement information or the feedback mode is fixedly set.

For example, when the representation value of the element is greater than or equal to the specified threshold of the element, the requirement information indicates the delayed mode, or the requirement information indicates a determined padding requirement, for example, a padding requirement corresponding to $m_{PAD}$=10. For another example, when the representation value of the element is less than or equal to the specified threshold of the element, the requirement information indicates the immediate mode and no padding requirement. Optionally, the specified threshold in these examples may be fixedly set in a standard, or may be transmitted between the first device and the second device via signaling. This is not limited.

For example, the element is the bit quantity. The mapping relationship may be that once the quantity of bits that need to be processed by the first device is greater than a specified threshold, the spatial stream quantity is greater than a specified threshold, or the RU is greater than a specified size, the delayed mode may be directly used, or a specified padding requirement may be used.

As described above, the trigger frame is used to trigger the first device to feed back the sensing content.

Optionally, in a more specific implementation, the trigger frame is used to trigger the first device to feed back sensing content of a first type. The first type belongs to one of at least two types of sensing content that can be fed back by the first device, and the at least two types of sensing content include a CSI type or a truncated channel impulse response (truncated channel impulse response, TCIR) type.

In this application, different sensing content means different types of sensing content. For example, that the sensing content is the CSI and that the sensing content is the TCIR are two different types of sensing content.

A trigger frame sent by the second device may be used to trigger the first device to feed back sensing content of a type. In this case, the first information indicates a padding requirement of the first device for the trigger frame that triggers the feedback of the sensing content of the type. For example, a trigger frame A triggers the first device to feed back the CSI, and the first information indicates a padding requirement of the first device for the trigger frame A. A trigger frame B triggers the first device to feed back the TCIR, and the first information indicates a padding requirement of the first device for the trigger frame B. For feedback of sensing content of any type, a specific implementation in which the first information indicates the padding requirement of the first device for a trigger frame may be any implementation in the foregoing Solution 1 and Solution 2. This is not limited. For example, for sensing content of the CSI type, the first device uses Solution 1 to indicate the padding requirement of the first device for a trigger frame, and for sensing content of the TCIR type, the first device uses an implementation in Solution 2 to indicate the padding requirement of the first device for a trigger frame. Alternatively, for different types of sensing content, a same solution may indicate padding requirements of the first device for respective trigger frames.

The foregoing embodiments of Solution 1 and Solution 2 provide a method in which the first device can feed back the sensing content to the second device in the immediate mode on a premise that the padding bit for sensing is added to the trigger frame. It may be understood that, because the first device indicates, to the second device in advance, the padding requirement of the first device for the trigger frame, when sending the trigger frame, the second device adds the padding bit for sensing, to satisfy the padding requirement of the first device for the trigger frame, so that the first device can have enough time to receive the trigger frame and feed back the sensing content. Efficiency of feeding back the sensing content by the sensing receiver can be improved by using any one embodiment of the foregoing Solution 1 and Solution 2. In addition, a mode in which the sensing receiver feeds back the sensing content is more flexible.

As described in the foregoing embodiments of this application, the requirement information is used to determine the padding requirement for sensing and the feedback mode. Specifically, in the foregoing embodiments, the following may be related to: The requirement information indicates the immediate mode and the padding requirement, the requirement information indicates the immediate mode and no padding requirement, or the requirement information indicates the delayed mode and no padding requirement. For flexibility in implementation, this application further provides some other implementations. For example, the requirement information may indicate only the padding requirement. In this case, the immediate mode is indicated by default or implicitly. The following Table a is used as an example. For the bit quantity range [a1, b1], the requirement information indicates only $m_{PAD}$=A, and implicitly indicates the immediate mode. This is similar for bit quantity ranges [a2, b2], ..., and [a6, b6]. In this implementation, for the immediate mode and the delayed mode that have no padding requirement, the requirement information may indicate the immediate mode or the delayed mode. The following Table a or Table b is used as an example for description.

**Table a**

| Element (bit quantity range) | Requirement information |
|---|---|
| [a0, b0] | Immediate mode |
| [a1, b1] | $m_{PAD}$=A |
| [a2, b2] | $m_{PAD}$=B |

(continued)

| Element (bit quantity range) | Requirement information |
|---|---|
| [a3, b3] | $m_{PAD}$=C |
| [a4, b4] | $m_{PAD}$=D |
| [a5, b5] | $m_{PAD}$=E |
| [a6, b6] | $m_{PAD}$=F |
| [a7, b7] | Delayed mode |

**Table b**

| Element (bit quantity range) | Requirement information |
|---|---|
| 0 to a | Immediate mode |
| a to b | $m_{PAD}$=A |
| b to c | $m_{PAD}$=B |
| c to +∞ | Delayed mode |

Optionally, $m_{PAD}$=0 may implicitly indicate the immediate mode without the padding requirement. When $m_{PAD}$ is a value other than 0, the immediate mode with the padding requirement is implicitly indicated, and the value of $m_{PAD}$ is used to determine the specific padding requirement. In addition, when the requirement information indicates the "delayed mode", it indicates the delayed mode without the padding requirement, for example, as shown in Table c or Table d below.

**Table c**

| Element (bit quantity range) | Requirement information |
|---|---|
| [a0, b0] | $m_{PAD}$=0 |
| [a1, b1] | $m_{PAD}$=A |
| [a2, b2] | $m_{PAD}$=B |
| [a3, b3] | $m_{PAD}$=C |
| [a4, b4] | $m_{PAD}$=D |
| [a5, b5] | $m_{PAD}$=E |
| [a6, b6] | $m_{PAD}$=F |
| [a7, b7] | Delayed mode |

**Table d**

| Element (bit quantity range) | Requirement information |
|---|---|
| 0 to a | $M_{PAD}$=0 |
| a to b | $m_{PAD}$=A |
| b to c | $m_{PAD}$=B |
| c to +∞ | Delayed mode |

In addition, optionally, in yet another implementation, when the requirement information indicates the padding requirement, both the immediate mode and the delayed mode may be indicated. For example, the time length indicated by the requirement information is not zero, for example, is 16 microseconds, 32 microseconds, 64 microseconds, or 128 microseconds, and may represent the padding requirement in the immediate mode, or may represent the padding requirement in the delayed mode. For another example, when the value of $m_{PAD}$ indicated by the requirement information is not zero, for example, $m_{PAD}$=A or $m_{PAD}$=B, it may indicate that the padding requirement in the immediate mode is $m_{PAD}$=A or $m_{PAD}$=B, or the padding requirement in the delayed mode is $m_{PAD}$=A or $m_{PAD}$=B. This is not limited. For example, in this case, 1 additional bit may be added to distinguish the immediate mode from the delayed mode.

The following further provides a solution in which the first device has no padding requirement for the trigger frame, for example, Solution 3.

Solution 3

In some cases, after receiving the trigger frame from the second device, the first device sends the sensing content to the second device in the immediate mode.

Optionally, these cases may include one or more of the following:

A trigger frame probe phase exists between a null data packet announcement NDPA phase of sensing measurement, and receiving of the trigger frame and sending of the sensing content;
a threshold-based channel change collection phase exists between the NDPA phase of sensing measurement, and the receiving of the trigger frame and the sending of the sensing content; or
one or more other phases exist between the NDPA phase of sensing measurement, and the receiving of the trigger frame and the sending of the sensing content.

It should be understood that, in the foregoing cases, because there are more other phases after the NDPA phase, it is equivalent to that more reaction and processing time has been given to the first device. Therefore, the first device may have no padding requirement for the trigger frame used to trigger the first device to feed back the sensing content.

Optionally, in the foregoing cases, that the first device has no padding requirement for the trigger frame may be by default, and does not need to be indicated by the first device to the second device. Alternatively, in the foregoing cases, the padding requirement of the first device for the trigger frame may be indicated by the first device to the second device. For example, the first device sends z-bit indication information to the second device, where the z-bit indication information indicates whether there is a lowest padding requirement in the foregoing cases. For example, the z-bit indication information may include 2 bits, and may indicate four cases, including the foregoing three cases. Alternatively, the z-bit indication information may include 1 bit, to indicate that the first device has no minimum padding requirement when any one of the foregoing cases is satisfied.

In Solution 1 and Solution 2, the second device receives the first information from the first device, and learns, in advance based on the first information, the padding requirement of the first device for the trigger frame. In this way, when sending the trigger frame, the second device adds the padding bit for sensing to the trigger frame, to satisfy the padding requirement of the first device for the trigger frame. Therefore, the first device can have enough time to feed back, in a current measurement instance, the sensing content that is fed back as triggered by the triggered frame.

The following further provides a solution in which the first device indicates the feedback mode for the sensing content to the second device, for example, Solution 4.

Solution 4

The first device indicates the feedback mode for the sensing content to the second device in a feedback frame, where the feedback mode for the sensing content is one of the following:

the immediate mode, or
the delayed mode.

In Solution 4, the second device that sends the trigger frame does not need to know in advance or determine whether the first device that receives the trigger frame has enough time to feed back, in a current measurement instance, the sensing content that is fed back as triggered. After the second device sends the trigger frame to the first device, when sending the sensing content, the first device notifies the second device whether the sensing content is a feedback in the immediate mode or the delayed mode. For example, the first device indicates the immediate mode or the delayed mode by using 1 bit.

For example, the first device receives the trigger frame from the second device, and the trigger frame is used to trigger the first device to send the sensing content. The first device sends the sensing content and second information to the second device. The second information indicates the feedback mode for the sensing content, and the feedback mode is either the immediate mode or the delayed mode.

Optionally, the second information may be carried in a sensing measurement report, or may exist in a CSI variation degree feedback frame. Based on the second information, the second device may know whether the sensing content is fed back in the immediate mode by the first device or the delayed mode. For example, the second device may know whether the sensing content is sensing content that is fed back as triggered in the current measurement instance or sensing content that is fed back as triggered in previous y (y is an integer greater than or equal to 1) measurement instances. For example, when y=0, it indicates that the sensing content fed back by the first device is the sensing content that is fed back as triggered in the current measurement instance, that is, the immediate feedback mode. When y=3, it indicates that the sensing content fed back by the first device is the sensing content that is fed back as triggered in previous three measurement instances, that is, the delayed mode.

Solution 4 is used. The first device does not need to indicate, to the second device in advance, the padding requirement for sensing related to the trigger frame, and the first device (that is, the sensing receiver) may determine, by itself, whether feedback can be immediately performed or delayed.

In some of the foregoing solutions or embodiments, the first information sent by the first device to the second device indicates the padding requirement of the first device for the trigger frame, and the padding requirement is for sensing. When the second device enables, based on the first information, the sent trigger frame to satisfy the padding requirement, the first device may feed back a measurement result for sensing to the second device in the immediate mode. It should be understood that, in the trigger-based sensing procedure, because a format of the trigger frame is complex, and the first device needs to prepare a corresponding response, more reaction and processing time needs to be given to the first device. Therefore, the first device indicates the padding requirement of the first device for the trigger frame to the second device via the first information, so that the trigger frame sent by the second device satisfies the padding requirement. Actually, the trigger frame satisfies the padding requirement, that is, more time is given to the first device for reaction and processing, so that the first device can feed back (or report) the measurement result for sensing to the second device in the immediate mode.

Optionally, the padding requirement of the first device for the trigger frame may be further understood as that, to enable the first device to perform sensing feedback in the immediate mode, additional padding time is required after an NDPA probe phase (for example, after the first device receives an NDP in the NDPA probe phase); or may be understood that, to enable the first device to perform sensing feedback in the immediate mode, additional padding time is required in the sensing measurement instance before the first device feeds back the measurement result for sensing. In other words, to enable the first device to feed back the measurement result for sensing in the immediate mode, padding may be performed in a time period between receiving, by the first device, a PPDU that needs to be measured and feeding back, by the first device, a measurement result obtained by measuring the PPDU, and a padded location is not limited. For example, in some of the foregoing solutions or embodiments, an example in which the padding time is additionally added after the trigger frame. Actually, to enable the first device to feed back the measurement result for sensing to the second device in the immediate mode, it is not limited to additionally adding the padding time after the trigger frame, and there may be some other implementations.

The following further describes some embodiments. In these embodiments, a first device indicates a padding requirement to a second device. The padding requirement may be understood as first duration from time at which the first device receives a first PPDU to time at which the first device sends a second PPDU in an immediate mode. The second PPDU includes a measurement result for sensing, and the measurement result for sensing is obtained by the first device by measuring the first PPDU.

In an embodiment, the first device indicates the padding requirement in signaling interaction with the second device, to indicate a case in which the first device may perform feedback in the immediate mode and a case in which the first device may perform feedback in a delayed mode. For example, the signaling interaction between the first device and the second device may be in a measurement setup phase. For example, the first device notifies the padding requirement in a measurement setup request frame or a measurement setup response frame.

In the following embodiments, a null data packet announcement may also be referred to as a null data physical layer protocol data unit announcement (null data physical layer protocol data unit announcement, NDPA). A null data packet may also be referred to as a null data physical layer protocol data unit (null data physical layer protocol data unit, NDP).

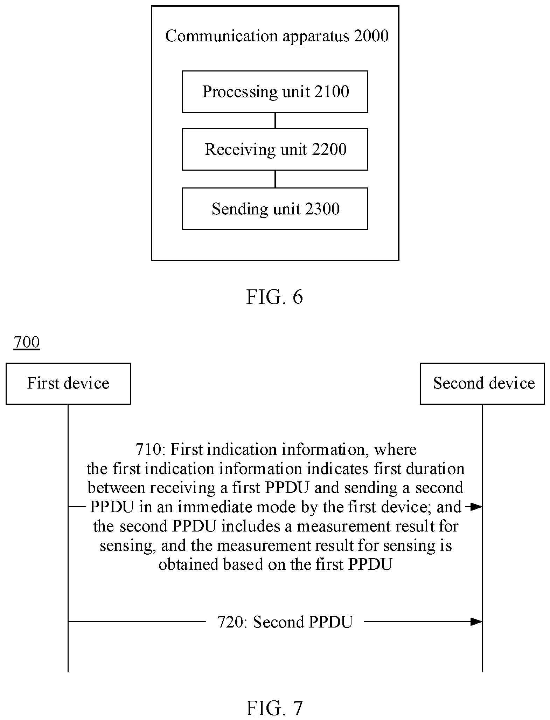

The following describes this embodiment with reference to FIG. 7.

FIG. 7 is a schematic flowchart of another communication method according to this application.

710: A first device sends first indication information to a second device, where the first indication information indicates first duration between receiving a first PPDU and sending a second PPDU in an immediate mode by the first device; and

the second PPDU includes a measurement result for sensing, and the measurement result for sensing is obtained based on the first PPDU.

The second device receives the first indication information from the first device.

Optionally, the first indication information indicates first duration between an end moment of the first PPDU and a start moment at which the first device sends the second PPDU in the immediate mode. Optionally, the first duration may be understood as one of the following:

shortest duration between receiving the first PPDU and sending the second PPDU in the immediate mode by the first device;
duration between an end moment at which the first device receives the first PPDU and the start moment at which the first device sends the second PPDU in the immediate mode;
expected duration in which the first device can send the second PPDU in the immediate mode;
duration required by the first device to send the second PPDU in the immediate mode;
shortest duration required by the first device to send the second PPDU in the immediate mode; or
a duration threshold used to determine whether the first device can send the second PPDU in the immediate mode, where if the duration threshold is satisfied, the first device can send the second PPDU in the immediate mode; otherwise, the first device can send the second PPDU only in a delayed mode. Herein, that the duration threshold is satisfied may be that the duration threshold is greater than or equal to the duration threshold; and that the duration threshold is not satisfied may be that the duration threshold is less than the duration threshold. Alternatively, that the duration threshold is satisfied may be that the duration threshold is greater than the duration threshold; and that the duration threshold is not satisfied may be that the duration threshold is less than or equal to the duration threshold. This is not limited.

720: The first device sends the second PPDU.

Optionally, in an implementation, for the first device, that the first device sends the first indication information to the second device is reporting, to the second device, a padding requirement that the first device sends the measurement result for sensing in the immediate mode. After the second device receives the first indication information, if the padding requirement indicated by the first indication information is satisfied, the first device performs feedback in the immediate mode. Otherwise, because time of reaction and processing by the first device is not enough, the first device can perform feedback only in the delayed mode. For example, the padding requirement is the first duration. If the duration between receiving the first PPDU by the first device to sending the second PPDU by the first device satisfies the first duration, the first device sends the second PPDU in the immediate mode. If the duration between receiving the first PPDU by the first device to sending the second PPDU by the first device does not satisfy the first duration, the first device sends the second PPDU in the delayed mode.

In this embodiment, as described above, that the duration between receiving the first PPDU by the first device to sending the second PPDU by the first device satisfies the first duration may mean that the duration between receiving the first PPDU by the first device to sending the second PPDU by the first device is greater than or equal to the first duration. That the duration between receiving the first PPDU by the first device to sending the second PPDU by the first device does not satisfy the first duration may mean that the duration between receiving the first PPDU by the first device to sending the second PPDU by the first device is less than the first duration.

Alternatively, that the duration between receiving the first PPDU by the first device to sending the second PPDU by the first device satisfies the first duration may mean that the duration between receiving the first PPDU by the first device to sending the second PPDU by the first device is greater than the first duration. That the duration between receiving the first PPDU by the first device to sending the second PPDU by the first device does not satisfy the first duration may mean that the duration between receiving the first PPDU by the first device to sending the second PPDU by the first device is less than or equal to the first duration. This is not limited.

Therefore, in step 720, if the duration between receiving the first PPDU and sending the second PPDU by the first device satisfies the first duration, the first device sends the second PPDU in the immediate mode. If duration between receiving the first PPDU and sending the second PPDU by the first device does not satisfy the first duration, the first device sends the second PPDU in the delayed mode.

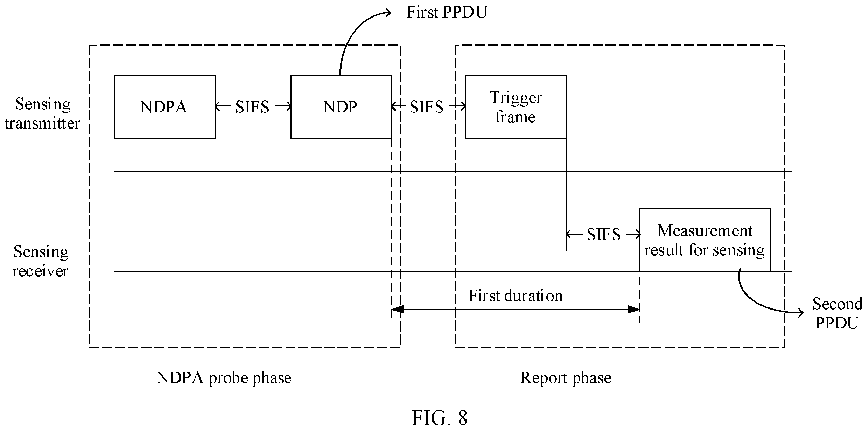

For example, the first PPDU is an NDP in an NDPA probe phase, and the second PPDU is a PPDU including the measurement result for sensing. In this example, the duration between receiving the first PPDU and sending the second PPDU in the immediate mode by the first device is duration between an end moment of the NDP and the start moment at which the first device sends the second PPDU in the immediate mode. FIG. 8 is an example of the duration between receiving the first PPDU and sending the second PPDU by the first device. As shown in FIG. 8, the first PPDU is the NDP at the NDPA probe phase, and the second PPDU is a PPDU including a measurement result for sensing in a reporting phase. The measurement result for sensing (or sensing content) is obtained by the first device by measuring the NDP. In this example, the first indication information specifically indicates the duration between the end moment of the NDP and the start moment at which the first device sends the second PPDU in the immediate mode. Optionally, the first duration may include an SIFS between the NDP and a trigger frame and an SIFS between the trigger frame and the second PPDU. Alternatively, the first duration may include some of these SIFSs. Alternatively, the first duration may not include these SIFSs. Alternatively, the first duration may be a length of any time period between the end moment of the NDP and a start moment of the second PPDU. This is not limited.

Optionally, the end moment of the first PPDU may be an end moment at which the second device sends the first PPDU, or may be an end moment at which the first device receives the first PPDU. Similarly, the start moment of the second PPDU may be a start moment at which the second device sends the second PPDU, or may be a start moment at which the second device receives the second PPDU. This is not limited. Optionally, the end moment and the start moment may be in units of microseconds.

Optionally, in these embodiments, the measurement result for sensing may alternatively be understood as a measurement result for sensing corresponding to the first PPDU, or a measurement result for sensing obtained by measuring the first PPDU. When the first PPDU is the NDP, the measurement result for sensing may be a measurement result for sensing corresponding to the NDP. Alternatively, it may be understood as that the measurement result for sensing is obtained by measuring the NDP.

For example, the first indication information may indicate an index value in any row in Table 6, and a padding requirement corresponding to the index value and a corresponding feedback mode are shown in Table 6.

**Table 6**

| Index value | Padding requirement and the corresponding feedback mode |
| --- | --- |
| ID=0 | Immediate mode and 0 $\mu$s |
| ID=1 | Immediate mode and 64 $\mu$s |
| ID=2 | Immediate mode and 96 $\mu$s |
| ID=3 | Immediate mode and 128 $\mu$s |
| ID=4 | Immediate mode and 256 $\mu$s |
| ID=5 | Reserved (reserved) |
| ID=6 | Reserved (reserved) |
| ID=7 | Delayed mode and 0 $\mu$s |

For example, the index value indicated by the first indication information is ID=1, or the index value included in the first indication information is "1", where "ID=1" corresponds to "immediate mode and 64 $\mu$s", indicating that the shortest duration between receiving the first PPDU and sending the second PPDU in the immediate mode by the first device is 64 $\mu$s. In other words, if the first device needs to feed back the measurement result for sensing in the immediate mode, the padding requirement is at least 64 $\mu$s. Alternatively, 64 $\mu$s may be considered as a duration threshold. When the duration threshold is satisfied, the immediate mode is used, and when the duration threshold is not satisfied, the delayed mode is used. For example, that the duration threshold is satisfied is that it is greater than or equal to the duration threshold. If the duration between receiving the first PPDU and sending the second PPDU by the first device is greater than or equal to 64 $\mu$s, the first device feeds back the measurement result for sensing in the immediate mode. If the duration between receiving the first PPDU and sending the second PPDU by the first device is less than 64 $\mu$s, the first device feeds back the measurement result for sensing in the delayed mode. For another example, "ID=0" corresponds to "immediate mode and 0 $\mu$s", indicating that the duration threshold is 0 $\mu$s. If the duration between receiving the first PPDU and sending the second PPDU by the first device is greater than or equal to 0 $\mu$s, the first device uses the immediate mode.

Optionally, the first indication information indicates the padding requirement corresponding to the index value in the row in Table 6 and the feedback mode corresponding to the padding requirement. For example, the first indication information may be specifically "immediate PPDU and 64 $\mu$s", indicating that the duration threshold is 64 $\mu$s. If it is greater than or equal to 64 $\mu$s, the immediate mode is used. On the contrary, if it is less than 64 $\mu$s, the delayed mode is used.

In addition, a receiver supporting only the delayed mode is considered. Table 6 further includes a case of ID=7. For example, the index value indicated by the first indication information is ID=7, where "ID=7" corresponds to "delayed mode and 0 $\mu$s", indicating that the shortest duration between receiving the first PPDU and sending the second PPDU in the immediate mode by the first device is 0 $\mu$s. If the duration between receiving the first PPDU and sending the second PPDU by the first device is greater than or equal to 0 $\mu$s, the corresponding delayed mode is used. Similarly, it may also be considered that 0 $\mu$s is a duration threshold. If the duration threshold is satisfied, the delayed mode is used.

It can be learned that in this embodiment, the first device indicates, to the second device via the first indication information, a duration requirement required by the first device to use a corresponding feedback mode, where the duration requirement may be represented by a duration threshold. If the duration between receiving the first PPDU and sending the second PPDU by the first device satisfies the duration threshold, the first device feeds back the measurement result for sensing in the corresponding feedback mode. For example, the duration threshold may be one of 0 $\mu$s, 64 $\mu$s, 96 $\mu$s, 128 $\mu$s, or 256 $\mu$s shown in Table 6, or may be another value indicating the duration. Particularly, when the duration threshold is 0 $\mu$s and corresponds to the delayed mode (that is, ID=7), it indicates that when the duration between receiving the first PPDU by the first device to sending the second PPDU by the first device satisfies 0 $\mu$s, the first device feeds back the measurement result for sensing in the delayed mode. When the duration threshold is 0 $\mu$s and corresponds to the immediate mode (that is, ID=0), it indicates that when the duration between receiving the first PPDU by the first device to sending the second PPDU by the first device satisfies 0 μs, the first device feeds back the measurement result for sensing in the immediate mode.

It should be understood that, in Table 6, when the padding requirement corresponding to ID=7 and the delayed mode corresponding to the padding requirement are not considered, and when the duration between receiving the first PPDU by the first device to sending the second PPDU by the first device satisfies the padding requirement (or the duration requirement) indicated by the first indication information, the first device performs feedback in the immediate mode. Otherwise, the first device can perform feedback only in the delayed mode.

Optionally, the first indication information may indicate an index value in any row in Table 7. By default, a padding requirement corresponding to each index value is the padding requirement for the first device to use the immediate mode. For example, if the first indication information indicates that the index value is 1, it indicates that the padding requirement for the first device to use the immediate mode is at least 64 μs. If it is greater than or equal to 64 μs, the immediate mode is used. If it is less than 64 μs, the delayed mode is used. Alternatively, the first indication information may indicate the padding requirement corresponding to the index value in the row in Table 7. By default, the padding requirement is a padding requirement for the first device to use the immediate mode.

**Table 7**

| Index value | Padding requirement |
|-------------|---------------------|
| ID=0 | 0 μs |
| ID=1 | 64 μs |
| ID=2 | 96 μs |
| ID=3 | 128 μs |
| ID=4 | 256 μs |
| ID=5 | Reserved (reserved) |
| ID=6 | Reserved (reserved) |
| ID=7 | Reserved (reserved) |

It should be understood that the padding requirement in Table 6 or Table 7 may be a minimum padding requirement, that is, duration that needs to be at least satisfied between the end moment of the first PPDU and the start moment of the second PPDU. Alternatively, duration corresponding to the padding requirement in Table 6 or Table 7 may be greater than the duration corresponding to the minimum padding requirement. In an example, a minimum padding requirement for the first device to use the immediate mode is 8 microseconds, and the first device sends the first indication information. The padding requirement indicated by the first indication information may be duration greater than 8 microseconds, for example, 10 microseconds.

Optionally, in the foregoing example of Table 6 or Table 7, the index value may be specifically several bits, for example, m bits. Optionally, the m bits may be carried in a frame interaction process before the NDP. For example, the m bits may be carried in a sensing measurement setup request frame or a sensing measurement setup response frame. It can be learned from Table 6 or Table 7 that different values of the m bits respectively correspond to different padding requirements. An example in which m=3 is used. A padding requirement corresponding to 001 is 64 μs, a padding requirement corresponding to 010 is 96 μs, and the like.

Optionally, the first device may directly indicate the padding requirement by using x bits. In other words, the first indication information may be the x bits, and values of the x bits represent the duration corresponding to the padding requirement. For example, the padding requirement is the first duration between receiving the first PPDU and sending the second PPDU in the immediate mode by the first device. For example, when x=6, 000000 indicates 0 μs, and 000011 indicates 3 μs. If the first indication information is 000011, it indicates that shortest duration required by the first device to feed back the measurement result for sensing in the immediate mode is 3 μs. In this implementation, when the first indication information is a specific value, it may indicate that the first device uses the delayed mode. The specific value may be agreed upon or determined by the first device and the second device through negotiation. This is not limited.

It can be seen that, in this embodiment, if duration between an end moment of the NDPA probe phase and reporting the measurement result for sensing by the first device satisfies (is greater than or equal to) the shortest duration indicated by the first indication information, the first device may use the corresponding feedback mode to perform feedback. Otherwise, because time of reaction and processing is not satisfied, the first device can perform feedback only in the delayed mode.

In addition, in Table 6 or Table 7, the reserved index value may be considered as an index value that is not sent when the first device indicates the padding requirement to the second device. Alternatively, from a perspective of the second device, if the index value indicated by the first indication information is the reserved index value, for example, ID=5 or ID=6 in Table 6, the second device ignores the first indication information or does not process the first indication information.

In another embodiment, the first device sends the first indication information to the second device. The first indication information indicates the shortest duration between receiving the first PPDU and sending the second PPDU in the immediate mode by the first device. The second device needs to ensure that duration between end time of the first PPDU and time of reporting the measurement result for sensing by the first device satisfies the shortest duration, that is, is greater than or equal to the shortest duration. In this embodiment, in a possible implementation, the padding requirement indicated by the first device to the second device via the first indication information is necessarily satisfied by the second device by default. In another possible implementation, when the first device sends the first indication information to the second device, the first device further sends third indication information to the second device, and the third indication information indicates that the padding requirement indicated by the first indication information needs to be satisfied by the second device. In this embodiment, the first device reports the measurement result for sensing in the immediate mode. Optionally, in an example, when the first device sends the third indication information to the second device, the first device may further receive the second indication information from the second device. In this case, the second indication information indicates the first device to use the immediate mode. This example may be understood as that the first device indicates, to the second device via the third indication information, that the first device is required to use the immediate mode. Then, the second device sends the second indication information to the first device based on the third indication information. The second indication information indicates the first device to use the immediate mode. The step of sending, by the first device, the third indication information to the second device may be performed before the step of receiving, by the first device, the second indication information from the second device. Optionally, the shortest duration requirement may be finally determined by the first device and the second device through negotiation.

ID=2 in Table 6 is used as an example. If the index value indicated by the first indication information sent by the first device is 2, the second device needs to satisfy that the duration between the end moment of the NDP and the start moment at which the first device reports the second PPDU including the measurement result for sensing is greater than or equal to 96 μs. Therefore, the first device may feed back the measurement result for sensing in the immediate mode.

In yet another embodiment, the first device sends the first indication information to the second device. The first indication information indicates the first duration between receiving the first PPDU and sending the second PPDU in the immediate mode by the first device. However, whether the first device uses the immediate mode or the delayed mode to feed back the measurement result for sensing depends on the second device. Specifically, the first device indicates, via the first indication information, to the second device that the first device feeds back the padding requirement for the measurement result for sensing in the immediate mode. The second device may determine (or select), based on the first indication information, that the first device feeds back the measurement result for sensing in the immediate mode or the delayed mode. If the second device requires the first device to feed back the measurement result for sensing in the immediate mode, the second device sends the second indication information to the first device, where the second indication information indicates the first device to send the second PPDU in the immediate mode. Alternatively, if the second device requires the first device to feed back the measurement result for sensing in the delayed mode, the second device sends the second indication information to the first device, where the second indication information indicates the first device to send the second PPDU in the delayed mode. It should be noted that, in this embodiment, after the first device notifies the second device of the padding requirement, regardless of whether the padding requirement is satisfied, whether the first device uses the immediate mode or the delayed mode is determined by the second device. For example, when the padding requirement is satisfied, if the second device requires the first device to use the delayed mode, the second device indicates, via the second indication information, the first device to use the delayed mode. Certainly, when the padding requirement is satisfied, if the second device requires the first device to use the immediate mode, the second device may alternatively indicate, via the second indication information, the first device to use the immediate mode.

Optionally, when the first indication information is an index value, it indicates that the first device uses the delayed mode. This is applicable in all the foregoing several embodiments. For example, in Table 6 or Table 7, when the index value indicated by the first indication information is ID=7, it indicates that the first device uses the delayed mode. Herein, the delayed mode corresponding to ID=7 is merely used as an example, and there may alternatively be another index value corresponding to the delayed mode. This is applicable in all the foregoing several embodiments.

Optionally, in any one of the foregoing embodiments, the first device may further indicate, by adding a separate field to the second PPDU, the first device to use the delayed mode. For example, the second PPDU carries 1 bit, and when a value of the 1 bit is set to 1, it indicates that the second PPDU is sent in the delayed mode. When the value of the 1 bit is set to 0, it indicates that the second PPDU is sent in the immediate mode. It may also be understood that the first device explicitly indicates, in the second PPDU, that a feedback mode for the second PPDU is the immediate mode or the delayed mode.

In addition, the index values shown in FIG. 6 or FIG. 7 and the padding requirement (for example, 64 μs, 96 μs, or 128 μs) corresponding to each index value are all used as examples. These index values may alternatively be represented in another manner, and the duration corresponding to the padding requirement in each table may alternatively be another value. This is not limited.

Optionally, the "padding requirement" mentioned in this specification may have different understandings in different implementations. For example, the padding requirement may be a requirement for padding duration (for example, the first duration), may be a requirement for shortest padding duration required when the first device uses the immediate mode, may be a requirement for padding bits at least required when the first device uses the immediate mode, or the like. For example, the padding requirement may be that the second device adds more phases between the NDPA phase and the reporting phase, for example, adds a trigger frame-based probe phase; or may be that sending time for a frame is increased, for example, the padding bit is added to a PPDU that carries the trigger frame. Actually, this is not limited, provided that the first device can obtain more processing duration before reporting the measurement result for sensing, so that the first device can feed back the measurement result for sensing in the immediate mode.

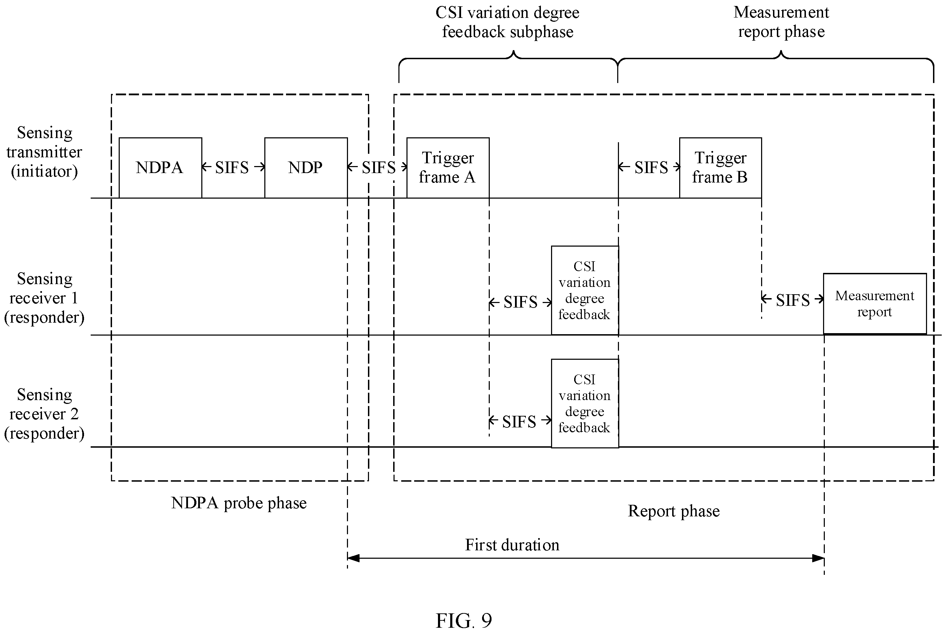

In addition, in the foregoing embodiments, the procedure of the sensing measurement instance shown in FIG. 2 is used as an example to describe the padding requirement. If the procedure of the sensing measurement instance shown in FIG. 3 is used as an example, the padding requirement is similar, and may be as shown in FIG. 9. FIG. 9 is another example of duration between receiving a first PPDU and sending a second PPDU by a first device. In this example, the first device feeds back a CSI variation degree to the second device. In this case, a padding requirement may refer to shortest duration required between an end moment of an NDPA probe phase (that is, an end moment of an NDP in the NDPA probe phase) and a moment at which the first device sends a measurement report (including the CSI variation degree).

In addition, the padding requirement in the foregoing several embodiments is described by using duration as an example, or certainly, may alternatively be another quantity, for example, a bit quantity, that corresponds to the duration and that may indicate the padding requirement. This is not limited.

In addition, in the foregoing embodiments, that the first device uses the immediate mode or the delayed mode is described by using the duration requirement as an example. Alternatively, the duration requirement in the foregoing embodiments may be replaced with a requirement for another parameter, for example, a requirement for a spatial stream quantity, a resource unit size, a bandwidth size, or a feedback size. A spatial stream is used as an example. If a spatial stream quantity of the measurement result for sensing that needs to be fed back by the first device is greater than 4, the first device uses the delayed mode. Otherwise, the first device uses the immediate mode. A person skilled in the art may learn, based on the foregoing embodiments designed based on the duration, how to apply the another parameter other than the duration. Details are not described again.

Optionally, in the foregoing embodiments, the first device indicates, to the second device via the first indication information, the duration requirement in which the immediate mode is used. The duration requirement may be further associated with another element related to the feedback mode for use, to implement a more accurate indication of the duration requirement. The element may include one or more of the spatial stream quantity, the RU size, the bit quantity, and the bit quantity range. In an example, in a measurement setup request phase before the NDPA probe phase, the first device sends the first indication information to the second device, and the first indication information indicates the duration requirement in which the first device feeds back the measurement result for sensing in the immediate mode. In an example, the duration requirement indicated by the first indication information may include more than one duration requirement, and each duration requirement is associated with several (which may be one or more) elements related to the feedback mode. For example, the duration requirement indicated by the first indication information includes a duration requirement 1, a duration requirement 2, a duration requirement 3, and a duration requirement 4. The duration requirement 1 is a duration requirement in which a spatial stream quantity fed back by the first device is Q, and the immediate mode is used for feedback. The duration requirement 2 is a duration requirement in which a spatial stream quantity fed back by the first device is R, and the immediate mode is used for feedback. The duration requirement 3 is a duration requirement in which bandwidth fed back by the first device is m, a spatial stream quantity fed back by the first device is z, and the immediate mode is used for feedback. The duration requirement 4 is a duration requirement in which an RU size fed back by the first device is n, and the immediate mode is used for feedback. In this example, both the duration requirement 1 and the duration requirement 2 are associated with spatial stream quantities, the duration requirement 3 is associated with the bandwidth and the spatial stream quantity, and the duration requirement 4 is associated with the RU size.

In the NDPA phase, if the second device indicates that the spatial stream quantity that the first device needs to feed back is Q, the second device may determine, based on the first indication information, that the duration requirement in which the first device feeds back, in the immediate mode, the measurement result corresponding to the NDP in the NDPA probe phase is specifically the duration requirement 1. If the second device indicates that the spatial stream quantity that the first device needs to feed back is R, the second device may determine, based on the first indication information, that the duration requirement in which the first device feeds back, in the immediate mode, the measurement result corresponding to the NDP in the NDPA probe phase is specifically the duration requirement 2.

The foregoing describes in detail the communication method in this application, and the following describes communication apparatuses in this application.

FIG. 5 is a schematic block diagram of a communication apparatus according to this application. As shown in FIG.

5, the communication apparatus 1000 includes a processing unit 1100, a receiving unit 1200, and a sending unit 1300.

Optionally, the communication apparatus 1000 may correspond to the first device in embodiments of this application.

In this case, in some solutions, the units of the communication apparatus 1000 are configured to implement the following functions.

The sending unit 1300 is configured to:

send first indication information to a second device, where the first indication information indicates first duration between receiving a first PPDU and sending a second PPDU in an immediate mode by the first device, the second PPDU includes a measurement result for sensing, and the measurement result for sensing is obtained based on the first PPDU; and

sending the second PPDU to the first device.

Optionally, in an embodiment, the sending unit 1300 is configured to:

if duration between receiving the first PPDU and sending the second PPDU by the communication apparatus satisfies the first duration, send the second PPDU in the immediate mode; or

if duration between receiving the first PPDU and sending the second PPDU by the communication apparatus does not satisfy the first duration, send the second PPDU in a delayed mode.

Optionally, in an embodiment, the receiving unit 1200 is configured to receive second indication information from the second device. The second indication information indicates the communication apparatus to send the second PPDU in the immediate mode or a delayed mode, and the second indication information is determined based on the first indication information.

The sending unit 1300 is configured to send the second PPDU based on the second indication information.

Optionally, in an embodiment, the sending unit 1300 is further configured to:

send third indication information to the second device. The third indication information indicates that duration between receiving the first PPDU and sending the second PPDU by the communication apparatus needs to satisfy the first duration, or the third indication information indicates that the communication apparatus is required to send the second PPDU in the immediate mode.

The sending unit 1300 sends the second PPDU in the immediate mode.

Optionally, in an embodiment, the first PPDU is an NDP.

Optionally, in an embodiment, the first duration is duration between an end moment of the NDP and a start moment at which the communication apparatus sends the second PPDU in the immediate mode.

Optionally, in an embodiment, a moment at which the receiving unit 1200 receives the first indication information is before a start moment of the NDP.

Optionally, in an embodiment, the first PPDU is an NDP, and a moment at which the receiving unit 1200 receives the second indication information is before a start moment of the NDP.

Optionally, in some other solutions, the units of the communication apparatus 1000 are configured to implement the following functions.

The sending unit 1300 is configured to send first information to a second device. The first information indicates a padding requirement of the communication apparatus for a trigger frame, and the padding requirement is for sensing.

The receiving unit 1200 is configured to receive the trigger frame from the second device. The trigger frame has the padding bit for sensing, and the padding bit is determined based on the padding requirement.

Optionally, in an embodiment, the first information indicates a mapping relationship between requirement information and an element, and the requirement information is used to determine the padding bit and a feedback mode. The element includes one or more of a spatial stream quantity, a resource unit RU size, a bit quantity, and a bit quantity range, and the feedback mode includes the immediate mode or the delayed mode.

Optionally, in an embodiment, the first information indicates a mapping relationship between R pieces of requirement information and R elements, the R pieces of requirement information one-to-one correspond to the R elements, and R is a positive integer.

In this implementation, optionally, the first information further indicates a value of R.

Optionally, in an embodiment, the first information indicates the element, and there is the mapping relationship between the element and the requirement information, and the requirement information is used to determine the padding bit and the feedback mode. The element includes one or more of the spatial stream quantity, the resource unit RU size, the bit quantity, and the bit quantity range, and the feedback mode includes the immediate mode or the delayed mode.

Optionally, in an embodiment, the first information indicates the requirement information, and there is the mapping relationship between the requirement information and the element, and the requirement information is used to determine the padding bit and the feedback mode. The element includes one or more of the spatial stream quantity, the resource unit RU size, the bit quantity, and the bit quantity range, and the feedback mode includes the immediate mode or the delayed mode.

Optionally, in an embodiment, that the requirement information is used to determine the padding bit and the feedback mode includes:

The requirement information is used to determine the feedback mode and a minimum requirement for the padding bit, and the minimum requirement is zero.

Optionally, in an embodiment, the mapping relationship between the element and the requirement information further includes:

When a representation value of the element is greater than or equal to a specified threshold, the padding requirement that is indicated by the requirement information and that is of the first device for the trigger frame is fixedly set.

Alternatively, when a representation value of the element is less than a specified threshold, the padding requirement that is indicated by the requirement information and that is of the first device for the trigger frame is fixedly set.

Optionally, in an embodiment, the element is the bit quantity, and the mapping relationship includes:

a mapping relationship between the bit quantity p and duration q; or
a mapping relationship between the bit quantity p, the duration q, and a preset bit quantity threshold r.

The duration q indicates the padding requirement, and p, q, and r are all positive integers.

Optionally, in an embodiment, the mapping relationship between the bit quantity p and the duration q satisfies the following relational expression:

(a quantity of bits that actually need to be processed/p)·q; and/or

the mapping relationship between the bit quantity p, the duration q, and the preset bit quantity threshold r satisfies the following relational expression:

((a quantity of bits that actually need to be processed-r)/p)·q, where

p, q, and r are all positive integers, and q is in a unit of a microsecond.

Optionally, in an embodiment, the first information indicates one or more of the following:

a first index value, where the first index value indicates the padding requirement and the immediate mode;
a second index value, where the second index value indicates the immediate mode and no padding requirement; and
a third index value, where the third index value indicates the delayed mode and no padding requirement.

Optionally, in an embodiment, the trigger frame is used to trigger the first device to feed back sensing content of a first type. The sensing content of the first type is one of at least two types of sensing content that can be fed back by the communication apparatus, and the at least two types of sensing content include channel state information CSI or truncated channel impulse response TCIR.

In another solution, the receiving unit 1200 is configured to receive a trigger frame from the second device. The trigger frame has no padding bit for sensing in one or more of the following cases:

A trigger frame probe phase exists between a null data packet announcement NDPA phase of sensing measurement, and receiving of the trigger frame and feedback of sensing content;
a threshold-based channel change collection phase exists between the NDPA phase of sensing measurement, and the receiving of the trigger frame and the feedback of the sensing content; or
one or more other phases exist between the NDPA phase of sensing measurement, and the receiving of the trigger frame and the feedback of the sensing content.

The processing unit 1100 is configured to control, based on the trigger frame, the sending unit 1300 to send the sensing content to the second device in the immediate mode.

In another solution, the receiving unit 1200 is configured to receive a trigger frame from the second device. The trigger frame is used to trigger the communication apparatus to feed back sensing content.

The processing unit 1100 is configured to control, based on the trigger frame, the sending unit 1300 to send the sensing content and second information to the second device based on the trigger frame. The second information indicates a feedback mode for the sensing content, and the feedback mode is one of the following:

the immediate mode, or

the delayed mode.

Optionally, the communication apparatus 1000 may correspond to the second device in embodiments of this application.

In some solutions, the units of the communication apparatus 1000 are configured to implement the following functions.

The receiving unit 1200 is configured to:

receive first indication information from a first device, where the first indication information indicates first duration between receiving a first PPDU and sending a second PPDU in an immediate mode by the first device, the second PPDU includes a measurement result for sensing, and the measurement result for sensing is obtained based on the first PPDU; and

receive the second PPDU from the first device.

Optionally, in an embodiment, if duration between receiving the first PPDU and sending the second PPDU by the first device satisfies the first duration, the second PPDU is sent in the immediate mode; or

if duration between receiving the first PPDU and sending the second PPDU by the first device does not satisfy the first duration, the second PPDU is sent in a delayed mode.

Optionally, in an embodiment, the sending unit 1300 is configured to send second indication information to the first device based on the first indication information. The second indication information indicates the first device to send the second PPDU in the immediate mode or a delayed mode.

If the second indication information indicates the first device to send the second PPDU in the immediate mode, the second PPDU is sent in the immediate mode; or

if the second indication information indicates the first device to send the second PPDU in the delayed mode, the second PPDU is sent in the delayed mode.

Optionally, in an embodiment, the receiving unit 1200 is configured to:

receive third indication information from the first device. The third indication information indicates that duration between receiving the first PPDU and sending the second PPDU by the first device needs to satisfy the first duration, or the third indication information indicates that the first device is required to send the second PPDU in the immediate mode.

The second PPDU is sent in the immediate mode.

Optionally, in an embodiment, the first PPDU is an NDP.

Optionally, in an embodiment, the first duration is duration between an end moment of the NDP and a start moment at which the first device sends the second PPDU in the immediate mode.

Optionally, in an embodiment, a moment at which the receiving unit 1200 receives the first indication information is before a start moment of the NDP.

Optionally, in an embodiment, the first PPDU is an NDP, and a moment at which the sending unit sends the second indication information is before a start moment of the NDP.

Optionally, in some other solutions, the units of the communication apparatus 1000 are configured to implement the following functions.

The receiving unit 1200 is configured to receive first information from a first device. The first information indicates a padding requirement of the first device for a trigger frame, and the padding requirement is for sensing.

The sending unit 1300 is configured to send the trigger frame to the first device. The trigger frame has the padding bit for sensing, and the padding bit is determined based on the padding requirement.

Optionally, in an embodiment, the first information indicates a mapping relationship between requirement information and an element, and the requirement information is used to determine the padding bit and a feedback mode. The element includes one or more of a spatial stream quantity, a resource unit RU size, a bit quantity, and a bit quantity range, and the feedback mode includes the immediate mode or the delayed mode.

Optionally, in an embodiment, the first information indicates a mapping relationship between R pieces of requirement information and R elements, the R pieces of requirement information one-to-one correspond to the R elements, and R is a positive integer.

In this implementation, optionally, the first information further indicates a value of R.

Optionally, in an embodiment, the first information indicates the element, and there is the mapping relationship between the element and the requirement information, and the requirement information is used to determine the padding bit and the feedback mode. The element includes one or more of the spatial stream quantity, the resource unit RU size, the bit quantity, and the bit quantity range, and the feedback mode includes the immediate mode or the delayed mode.

Optionally, in an embodiment, the first information indicates the requirement information, and there is the mapping relationship between the requirement information and the element, and the requirement information is used to determine the padding bit and the feedback mode. The element includes one or more of the spatial stream quantity, the resource unit RU size, the bit quantity, and the bit quantity range, and the feedback mode includes the immediate mode or the delayed mode.

Optionally, in an embodiment, that the requirement information is used to determine the padding bit and the feedback mode includes:

The requirement information is used to determine the feedback mode and a minimum requirement for the padding bit, and the minimum requirement is zero.

Optionally, in an embodiment, the mapping relationship between the element and the requirement information further includes:

When a representation value of the element is greater than or equal to a specified threshold, the padding requirement that is indicated by the requirement information and that is of the first device for the trigger frame is fixedly set.

Alternatively, when a representation value of the element is less than a specified threshold, the padding requirement that is indicated by the requirement information and that is of the first device for the trigger frame is fixedly set.

Optionally, in an embodiment, the element is the bit quantity, and the mapping relationship includes:

a mapping relationship between the bit quantity p and duration q; or
a mapping relationship between the bit quantity p, the duration q, and a preset bit quantity threshold r.

The duration q indicates the padding requirement, and p, q, and r are all positive integers.

Optionally, in an embodiment, the mapping relationship between the bit quantity p and the duration q satisfies the following relational expression:

(a quantity of bits that actually need to be processed/p)·q; and/or
the mapping relationship between the bit quantity p, the duration q, and the preset bit quantity threshold r satisfies the following relational expression:

((a quantity of bits that actually need to be processed-r)/p)·q, where
p, q, and r are all positive integers, and q is in a unit of a microsecond.

Optionally, in an embodiment, the first information indicates one or more of the following:

a first index value, where the first index value indicates the padding requirement and the immediate mode;
a second index value, where the second index value indicates the immediate mode and no padding requirement; and
a third index value, where the third index value indicates the delayed mode and no padding requirement.

Optionally, in an embodiment, the trigger frame is used to trigger the first device to feed back sensing content of a first type. The sensing content of the first type is one of at least two types of sensing content that can be fed back by the communication apparatus, and the at least two types of sensing content include channel state information CSI or truncated channel impulse response TCIR.

In the foregoing implementations, the receiving unit 1200 and the sending unit 1300 may alternatively be integrated into one transceiver unit, and have both of a receiving function and a sending function. This is not limited herein.

In embodiments in which the communication apparatus 1000 corresponds to the first device, the processing unit 1100 is configured to perform processing and/or an operation, other than sending and receiving actions, implemented inside the first device. The receiving unit 1200 is configured to perform a receiving action performed by the first device, and the sending unit 1300 is configured to perform a sending action performed by the first device.

For example, in FIG. 4, the sending unit 1300 performs a sending action in step 410, and optionally, further performs a sending action in step 430. The receiving unit 1200 performs a receiving action in step 420.

In embodiments in which the communication apparatus 1000 corresponds to the second device, the processing unit 1100 is configured to perform processing and/or an operation, other than sending and receiving actions, implemented inside the second device. The receiving unit 1200 is configured to perform a receiving action performed by the second device, and the sending unit 1300 is configured to perform a sending action performed by the second device.

For example, in FIG. 4, the receiving unit 1200 performs a receiving action in step 410, and optionally, further performs a receiving action in step 430. The sending unit 1300 performs a sending action in step 420.

FIG. 6 is a schematic diagram of a structure of a communication apparatus according to this application. As shown in FIG. 6, the communication apparatus 10 includes one or more processors 11, one or more memories 12, and one or more communication interfaces 13. The processor 11 is configured to control the communication interface 13 to receive and send a signal, the memory 12 is configured to store a computer program, and the processor 11 is configured to: invoke the computer program from the memory 12, and run the computer program, to enable the communication apparatus 10 to perform processing performed by the first device or the second device in the method embodiments of this application.

For example, the processor 11 may have a function of the processing unit 1100 shown in FIG. 5, and the communication interface 13 may have a function of the receiving unit 1200 and/or a function of the sending unit 1300 shown in FIG. 5. Specifically, the processor 11 may be configured to perform processing or an operation performed inside the communication apparatus, and the communication interface 13 is configured to perform a sending and/or receiving operation performed by the communication apparatus.

In an implementation, the communication apparatus 10 may be the first device in the method embodiments. In this implementation, the communication interface 13 may be a transceiver of the first device. The transceiver may include a receiver and/or a transmitter. Optionally, the processor 11 may be a baseband apparatus of the first device, and the communication interface 13 may be a radio frequency apparatus.

In another implementation, the communication apparatus 10 may be a chip (or a chip system) installed in the first device. In this implementation, the communication interface 13 may be an interface circuit or an input/output interface.

In an implementation, the communication apparatus 10 may be the second device in the method embodiments. In this implementation, the communication interface 13 may be a transceiver of the second device. The transceiver may include a receiver and/or a transmitter. Optionally, the processor 11 may be a baseband apparatus of the second device, and the communication interface 13 may be a radio frequency apparatus.

In another implementation, the communication apparatus 10 may be a chip (or a chip system) installed in the second device. In this implementation, the communication interface 13 may be an interface circuit or an input/output interface.

In FIG. 6, a dashed box behind a component (for example, the processor, the memory, or the communication interface) indicates that there may be at least one component.

Optionally, the memory and the processor in the foregoing apparatus embodiments may be physically independent units, or the memory and the processor may be integrated together. This is not limited in this specification.

In addition, this application further provides a computer-readable storage medium. The computer-readable storage medium stores computer instructions. When the computer instructions are run on a computer, an operation and/or processing performed by the first device in the method embodiments of this application are/is performed.

This application further provides a computer-readable storage medium. The computer-readable storage medium stores computer instructions. When the computer instructions are run on a computer, an operation and/or processing performed by the second device in the method embodiments of this application are/is performed.

In addition, this application further provides a computer program product. The computer program product includes computer program code or instructions. When the computer program code or the instructions are run on a computer, an operation and/or processing performed by the first device in the method embodiments of this application are/is performed.

This application further provides a computer program product. The computer program product includes computer program code or instructions. When the computer program code or the instructions are run on a computer, an operation and/or processing performed by the second device in the method embodiments of this application are/is performed.

In addition, this application further provides a chip. The chip includes a processor. A memory configured to store a computer program is disposed independent of the chip. The processor is configured to execute the computer program stored in the memory, so that a first device in which the chip is installed performs the operation and/or processing performed by the first device in any method embodiment.

Further, the chip may include a communication interface. The communication interface may be an input/output interface, an interface circuit, or the like. Further, the chip may include the memory.

This application further provides a chip. The chip includes a processor. A memory configured to store a computer program is disposed independent of the chip. The processor is configured to execute the computer program stored in the memory, so that a second device in which the chip is installed performs the operation and/or processing performed by the second device in any method embodiment.

Further, the chip may include a communication interface. The communication interface may be an input/output interface, an interface circuit, or the like. Further, the chip may include the memory.

Optionally, there may be one or more processors, there may be one or more memories, and there may be one or more memories.

In addition, this application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) data and/or information processed by the processor, to enable an operation and/or processing performed by a first device in any one of the method embodiments to be performed.

This application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) data and/or information processed by the processor, to enable an operation and/or processing performed by a second device in any one of the method embodiments to be performed.

In addition, this application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the first device in any method embodiment.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the second device in any method embodiment.

In addition, this application further provides a wireless communication system, including the first device and the second device in method embodiments of this application.

The processor in embodiments of this application may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, for example, a random access memory, a flash memory, a read-only memory, a programmable read-only memory, an electrically erasable programmable memory, a register, or the like. The storage medium is located in the memory, and the processor reads the information in the memory and completes the steps in the foregoing methods in combination with the hardware of the processor.

All or some of the methods provided in the foregoing embodiments may be implemented by software, hardware, firmware, or any combination thereof. When the software is used to implement embodiments, all or a part of embodiments may be implemented in a form of a computer program product. The computer program product may include one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media.

A memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in a plurality of forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memories in the systems and methods described in this specification include but are not limited to these memories and any memory of another suitable type.

To clearly describe the technical solutions of embodiments of this application, numbers such as "first" and "second" are used in embodiments of this application to distinguish between same items or similar items that provide basically same functions. For example, a first index value and a second index value are merely used to distinguish between different index values. A person skilled in the art may understand that the numbers such as "first" and "second" do not limit a quantity, a size, and an execution sequence. In addition, "first" and "second" are not limited to be different.

The term "and/or" in this application describes only an association relationship between associated objects and represents that three relationships may exist. For example, A and/or B may represent the following three cases: Only A exists, both A and B exist, and only B exists. A, B, and C each may be singular or plural. This is not limited.

In addition, the character "/" generally indicates an "or" relationship between the associated objects. "When" may alternatively be replaced with "in a case of".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   sending, by a first device, first indication information to a second device, wherein the first indication information indicates first duration between receiving a first physical layer protocol data unit PPDU and sending a second PPDU in an immediate mode by the first device, the second PPDU comprises a measurement result for sensing, and the measurement result for sensing is obtained based on the first PPDU; and
   sending, by the first device, the second PPDU.

2. The method according to claim 1, wherein the sending, by the first device, the second PPDU comprises:

   if duration between receiving the first PPDU and sending the second PPDU by the first device satisfies the first duration, sending, by the first device, the second PPDU in the immediate mode; or

if duration between receiving the first PPDU and sending the second PPDU by the first device does not satisfy the first duration, sending, by the first device, the second PPDU in a delayed mode.

3. The method according to claim 1, wherein the method further comprises:

receiving, by the first device, second indication information from the second device, wherein the second indication information indicates the first device to send the second PPDU in the immediate mode or a delayed mode, and the second indication information is determined based on the first indication information; and
the sending, by the first device, the second PPDU comprises:
sending, by the first device, the second PPDU based on the second indication information.

4. The method according to claim 1, wherein the method further comprises:

sending, by the first device, third indication information to the second device, wherein the third indication information indicates that duration between receiving the first PPDU and sending the second PPDU by the first device needs to satisfy the first duration, or the third indication information indicates that the first device is required to send the second PPDU in the immediate mode; and
the sending, by the first device, the second PPDU comprises:
sending, by the first device, the second PPDU in the immediate mode.

5. The method according to any one of claims 1 to 4, wherein the first PPDU is a null data physical layer protocol data unit NDP.

6. The method according to claim 5, wherein the first duration is duration between an end moment of the NDP and a start moment at which the first device sends the second PPDU in the immediate mode.

7. The method according to claim 5 or 6, wherein a moment at which the first device receives the first indication information is before a start moment of the NDP.

8. The method according to claim 3, wherein the first PPDU is a null data physical layer protocol data unit NDP, and a moment at which the first device receives the second indication information is before a start moment of the NDP.

9. A communication method, comprising:

receiving, by a second device, first indication information from a first device, wherein the first indication information indicates first duration between receiving a first PPDU and sending a second PPDU in an immediate mode by the first device, the second PPDU comprises a measurement result for sensing, and the measurement result for sensing is obtained based on the first PPDU; and
receiving, by the second device, the second PPDU from the first device.

10. The method according to claim 9, wherein the receiving, by the second device, the second PPDU from the first device comprises:

if duration between receiving the first PPDU and sending the second PPDU by the first device satisfies the first duration, receiving, by the second device, the second PPDU from the first device, wherein the second PPDU is sent in the immediate mode; or
if duration between receiving the first PPDU and sending the second PPDU by the first device does not satisfy the first duration, receiving, by the second device, the second PPDU from the first device, wherein the second PPDU is sent in a delayed mode.

11. The method according to claim 9, wherein the method further comprises:

sending, by the second device, second indication information to the first device based on the first indication information, wherein the second indication information indicates the first device to send the second PPDU in the immediate mode or a delayed mode; and
the receiving, by the second device, the second PPDU from the first device comprises:

receiving, by the second device, the second PPDU from the first device, wherein

if the second indication information indicates the first device to send the second PPDU in the immediate mode, the second PPDU is sent in the immediate mode; or
if the second indication information indicates the first device to send the second PPDU in the delayed mode, the second PPDU is sent in the delayed mode.

12. The method according to claim 9, wherein the method further comprises:

receiving, by the second device, third indication information from the first device, wherein the third indication information indicates that duration between receiving the first PPDU by the first device and sending the second PPDU by the first device needs to satisfy the first duration, or the third indication information indicates that the first device is required to send the second PPDU in the immediate mode; and
the receiving, by the second device, the second PPDU from the first device comprises:
receiving, by the second device, the second PPDU from the first device, wherein the second PPDU is sent in the immediate mode.

13. The method according to any one of claims 9 to 12, wherein the first PPDU is a null data physical layer protocol data unit NDP.

14. The method according to claim 13, wherein the first duration is duration between an end moment of the NDP and a start moment at which the first device sends the second PPDU in the immediate mode.

15. The method according to claim 13 or 14, wherein a moment at which the second device receives the first indication information is before a start moment of the NDP.

16. The method according to claim 11, wherein the first PPDU is a null data physical layer protocol data unit NDP, and a moment at which the second device sends the second indication information is before a start moment of the NDP.

17. A communication apparatus, comprising:

a sending unit, configured to send first indication information to a second device, wherein the first indication information indicates first duration between receiving a first PPDU and sending a second PPDU in an immediate mode by the communication apparatus, the second PPDU comprises a measurement result for sensing, and the measurement result for sensing is obtained based on the first PPDU, wherein
the sending unit is further configured to send the second PPDU.

18. The communication apparatus according to claim 17, wherein the sending unit is configured to:

if duration between receiving the first PPDU and sending the second PPDU by the communication apparatus satisfies the first duration, send the second PPDU in the immediate mode; or
if duration between receiving the first PPDU and sending the second PPDU by the communication apparatus does not satisfy the first duration, send the second PPDU in a delayed mode.

19. The communication apparatus according to claim 17, wherein the communication apparatus further comprises:

a receiving unit, configured to receive second indication information from the second device, wherein the second indication information indicates the communication apparatus to send the second PPDU in the immediate mode or a delayed mode, and the second indication information is determined based on the first indication information, wherein
the sending unit is configured to send the second PPDU based on the second indication information.

20. The communication apparatus according to claim 17, wherein the sending unit is further configured to:

send third indication information to the second device, wherein the third indication information indicates that duration between receiving the first PPDU and sending the second PPDU by the communication apparatus needs to satisfy the first duration, or the third indication information indicates that the communication apparatus is required to send the second PPDU in the immediate mode; and
send, by the sending unit, the second PPDU in the immediate mode.

21. The communication apparatus according to any one of claims 17 to 20, wherein the first PPDU is an NDP.

22. The communication apparatus according to claim 21, wherein the first duration is duration between an end moment of the NDP and a start moment at which the communication apparatus sends the second PPDU in the immediate mode.

23. The communication apparatus according to claim 21 or 22, wherein the communication apparatus further comprises the receiving unit, and a moment at which the receiving unit receives the first indication information is before a start moment of the NDP.

24. The communication apparatus according to claim 19, wherein the first PPDU is an NDP, and a moment at which the receiving unit receives the second indication information is before a start moment of the NDP.

25. A communication apparatus, comprising:

   a receiving unit, configured to receive first indication information from a first device, wherein the first indication information indicates first duration between receiving a first PPDU and sending a second PPDU in an immediate mode by the first device, the second PPDU comprises a measurement result for sensing, and the measurement result for sensing is obtained based on the first PPDU, wherein
   the receiving unit is further configured to receive the second PPDU from the first device.

26. The communication apparatus according to claim 25, wherein if duration between receiving the first PPDU and sending the second PPDU by the first device satisfies the first duration, the second PPDU is sent in the immediate mode; or
   if duration between receiving the first PPDU and sending the second PPDU by the first device does not satisfy the first duration, the second PPDU is sent in a delayed mode.

27. The communication apparatus according to claim 25, wherein the communication apparatus further comprises:

   a sending unit, configured to send second indication information to the first device based on the first indication information, wherein the second indication information indicates the first device to send the second PPDU in the immediate mode or a delayed mode, wherein
   if the second indication information indicates the first device to send the second PPDU in the immediate mode, the second PPDU is sent in the immediate mode; or
   if the second indication information indicates the first device to send the second PPDU in the delayed mode, the second PPDU is sent in the delayed mode.

28. The communication apparatus according to claim 25, wherein the receiving unit is further configured to:

   receive third indication information from the first device, wherein the third indication information indicates that duration between receiving the first PPDU and sending the second PPDU by the first device needs to satisfy the first duration, or the third indication information indicates that the first device is required to send the second PPDU in the immediate mode, wherein
   the second PPDU is sent in the immediate mode.

29. The communication apparatus according to any one of claims 25 to 28, wherein the first PPDU is an NDP.

30. The communication apparatus according to claim 29, wherein the first duration is duration between an end moment of the NDP and a start moment at which the first device sends the second PPDU in the immediate mode.

31. The communication apparatus according to claim 29 or 30, wherein a moment at which the receiving unit receives the first indication information is before a start moment of the NDP.

32. The communication apparatus according to claim 27, wherein the first PPDU is an NDP, and a moment at which the sending unit sends the second indication information is before a start moment of the NDP.

33. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 8 or the method according to any one of claims 9 to 16.

34. A chip, comprising a processor and a communication interface, wherein the communication interface is configured to: receive data and/or information, and transmit the received data and/or information to the processor; and the processor processes the data and/or information, to perform the method according to any one of claims 1 to 8 or the method according to any one of claims 9 to 16.

35. A computer-readable storage medium, wherein the computer-readable storage medium stores computer instructions; and when the computer instructions are run on a computer, the method according to any one of claims 1 to 8 or the method according to any one of claims 9 to 16 is implemented.

36. A computer program product, wherein the computer program product comprises computer program code; and when the computer program code is run on a computer, the method according to any one of claims 1 to 8 or the method according to any one of claims 9 to 16 is implemented.

EP 4 482 064 A1

FIG. 1

37

FIG. 2

FIG. 3

400

| First device |

410: First information, where
the first information indicates a padding
requirement of the first device for a trigger frame,
and the padding requirement is for sensing

420: Trigger frame, where
the trigger frame has a padding bit for sensing,
and the padding bit is determined based on the
padding requirement

430: Sensing content

| Second device |

**FIG. 4**

Communication apparatus 1000

Processing unit 1100

Receiving unit 1200

Sending unit 1300

**FIG. 5**

Communication apparatus 2000

Processing unit 2100

Receiving unit 2200

Sending unit 2300

FIG. 6

700

First device

Second device

710: First indication information, where
the first indication information indicates first duration
between receiving a first PPDU and sending a second
PPDU in an immediate mode by the first device; and
the second PPDU includes a measurement result for
sensing, and the measurement result for sensing is
obtained based on the first PPDU

720: Second PPDU

FIG. 7

First PPDU

| | | |
|---|---|---|
| Sensing transmitter | NDPA ←SIFS→ NDP | ←SIFS→ Trigger frame |

Sensing receiver ←SIFS→ Measurement result for sensing

First duration

Second PPDU

NDPA probe phase | Report phase

FIG. 8

FIG. 9

EP 4 482 064 A1

## INTERNATIONAL SEARCH REPORT

International application No.

**PCT/CN2023/077148**

### A. CLASSIFICATION OF SUBJECT MATTER

H04L 1/00(2006.01)i

According to International Patent Classification (IPC) or to both national classification and IPC

### B. FIELDS SEARCHED

Minimum documentation searched (classification system followed by classification symbols)

IPC: H04L H04B H04W

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP: 指示, 物理层协议数据单元, 立即, 立刻, 即时, 模式, 时间, 时长, 测量, 结果, 报告, 响应, 反馈, 延时, 延迟, indicate, PPDU, instant, mode, time, measure, result, report, response, feedback, delay

### C. DOCUMENTS CONSIDERED TO BE RELEVANT

| Category* | Citation of document, with indication, where appropriate, of the relevant passages | Relevant to claim No. |
|---|---|---|
| X | CN 110870358 A (LG ELECTRONICS INC.) 06 March 2020 (2020-03-06) description, paragraphs [0169]-[0362] | 1, 3-9, 11-17, 19-25, 27-36 |
| A | CN 107346996 A (HUAWEI TECHNOLOGIES CO., LTD.) 14 November 2017 (2017-11-14) entire document | 1-36 |
| A | CN 110831072 A (TP-LINK TECHNOLOGIES CO., LTD.) 21 February 2020 (2020-02-21) entire document | 1-36 |
| A | US 2018138959 A1 (LG ELECTRONICS INC.) 17 May 2018 (2018-05-17) entire document | 1-36 |

☐ Further documents are listed in the continuation of Box C.      ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 May 2023** | **30 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/077148**

| Patent document cited in search report | | | Publication date (day/month/year) | Patent family member(s) | | | Publication date (day/month/year) |
|---|---|---|---|---|---|---|---|
| CN | 110870358 | A | 06 March 2020 | KR | 20200002780 | A | 08 January 2020 |
| | | | | WO | 2020004782 | A1 | 02 January 2020 |
| | | | | MX | 2019014562 | A | 07 February 2020 |
| | | | | US | 2020008089 | A1 | 02 January 2020 |
| | | | | JP | 2020529146 | A | 01 October 2020 |
| | | | | EP | 3614752 | A1 | 26 February 2020 |
| CN | 107346996 | A | 14 November 2017 | None | | | |
| CN | 110831072 | A | 21 February 2020 | None | | | |
| US | 2018138959 | A1 | 17 May 2018 | WO | 2016167608 | A1 | 20 October 2016 |
| | | | | JP | 2018518085 | A | 05 July 2018 |
| | | | | KR | 20170117445 | A | 23 October 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210239627

- CN 202210439969